# EUROPÄISCHE PATENTSCHRIFT

(11) **EP 3 394 690 B1**
(45) Veröffentlichungstag und Bekanntmachung des Hinweises auf die Patenterteilung: **01.04.2020**
(21) Anmeldenummer: 16822157.0
(22) Anmeldetag: 21.12.2016
(51) Int. Cl.: G05B 19/418

(54) **VERFAHREN ZUM SORTIEREN VON FÖRDEROBJEKTEN AUF EINER FÖRDERANLAGE**
METHOD FOR SORTING CONVEYED OBJECTS ON A CONVEYOR SYSTEM
PROCÉDÉ POUR TRIER DES OBJETS TRANSPORTÉS SUR UNE INSTALLATION DE TRANSPORT

(30) Priorität: 21.12.2015 AT 510862015
(43) Veröffentlichungstag der Anmeldung: 31.10.2018
(73) Patentinhaber: TGW Logistics Group GmbH, 4614 Marchtrenk (AT)
(72) Erfinder: AHAMMER, Christian, 4623 Gunskirchen (AT); SCHRÖPF, Harald, 4600 Wels (AT)
(74) Vertreter: Burger, Hannes
(86) Internationale Anmeldenummer: PCT/EP2016/082068
(87) Internationale Veröffentlichungsnummer: WO 2017/108885

(56) Entgegenhaltungen:
- US-A1- 2009 065 330
- US-A1- 2010 122 942

## Beschreibung

Die Erfindung betrifft ein Verfahren zum Bündeln von Förderströmen an einem Fördertechnikelement/Knoten mit mehreren eingehenden Fördersegmenten, zumindest einer Ankopplung an ein abgehendes Fördersegment, auf das die eingehenden Fördersegmente zusammengeführt werden, und mehreren Anhalteeinrichtungen zum Anhalten von Förderobjekten beziehungsweise eines Förderflusses auf den eingehenden Fördersegmenten. Weiterhin betrifft die Erfindung ein Fördertechnikelement/Knoten zum Bündeln von Förderströmen mit mehreren eingehenden Fördersegmenten, zumindest einer Ankopplung für ein abgehendes Fördersegment, auf das die eingehenden Fördersegmente zusammengeführt werden, und mehreren Anhalteeinrichtungen zum Anhalten von Förderobjekten beziehungsweise eines Förderflusses auf den eingehenden Fördersegmenten. Schließlich betrifft die Erfindung auch eine Förderanlage mit mehreren solchen Fördertechnikelementen/Knoten, wobei zumindest eine Ankopplung für ein abgehendes Fördersegment des einen Fördertechnikelements/Knotens mit einem eingehenden Fördersegment eines anderen Fördertechnikelements/Knotens direkt oder indirekt verbunden ist.

Ein Verfahren, ein Fördertechnikelement sowie eine Förderanlage der genannten Art sind grundsätzlich bekannt (z.B. aus US 2010/122942 A1) Dabei werden mehrere an einem Fördertechnikelement eingehende Förderströme bedarfsweise angehalten und auf einen oder mehrere Ausgangsförderströme weitergeleitet, um Förderobjekte gezielt zu einem oder mehreren Zielen zu leiten. In der Regel verwaltet eine übergeordnete Steuerung eine Reihe von Kommissionieraufträgen und steuert die Elemente der Förderanlage so an, dass die einem Ziel (z.B. einem Kommissionierarbeitsplatz) zugeordneten Förderobjekte aus einem Lager ausgelagert und an das genannte Ziel transportiert werden, insbesondere in einer vorgegebenen Reihenfolge oder Sequenz. Entlang der Förderstrecke sind dazu Sensoren angeordnet, welche die passierenden Förderobjekte registrieren und der übergeordneten Steuerung melden, sodass diese Informationen darüber hat, wo sich welches Förderobjekt gerade befindet und wie die Förderanlage davon ausgehend anzusteuern ist. Insbesondere bei vielen zu versorgenden Zielen und eine großen Vielfalt an zu transportierenden Objekten resultiert eine komplexe steuerungstechnische Aufgabe, welche den Betrieb und insbesondere die Inbetriebnahme einer Förderanlage erschwert.

In einer einfachen Ausführungsform einer solchen Steuerung kann ein Förderobjekt, das einen solchen Sensor passiert, die Freigabe des an einem Fördertechnikelement eingehenden Förderstroms auslösen ("triggern"). Allerdings führt dieses vereinfachte Verfahren nur zu mäßigem Durchsatz durch die Förderanlage und daher nur zu einer geringen Zahl an ausgeführten Aufträgen pro Zeiteinheit.

Eine Aufgabe der Erfindung ist es daher, ein verbessertes Verfahren und ein verbessertes Fördertechnikelement zum Bündeln von Förderströmen anzugeben. Insbesondere soll die Komplexität einer Steuerung für eine Förderanlage reduziert beziehungsweise der Durchsatz durch dieselbe erhöht werden.

Die Aufgabe der Erfindung wird mit einem Verfahren der eingangs genannten Art gelöst, bei dem
- die Förderobjekte entsprechend ihrer Soll-Sortierreihenfolge aufsteigend/absteigend vektoriell verknüpft werden, und bei dem diese vektorielle Verknüpfung in einem Speicher einer dem Fördertechnikelement/Knoten zugeordneten Steuerung und/oder in einem Speicher einer übergeordneten Steuerung gespeichert wird,
- die Förderobjekte unterschiedlicher Soll-Sortierreihenfolgen, welche das Fördertechnikelement / den Knoten passieren, entsprechend ihrer Ist-Reihenfolge aufsteigend/absteigend vektoriell verknüpft werden und bei dem dies in der bereits gespeicherten vektoriellen Verknüpfung gespeichert wird, und
- an einem Fördertechnikelement/Knoten wartende Förderobjekte in einer solchen Abfolge freigegeben werden, welche einen Ring mit einem gleichbleibenden Richtungssinn in der gemeinsamen vektoriellen Verknüpfung der Soll-Sortierreihenfolgen und der Ist-Reihenfolge vermeiden.

Die Aufgabe der Erfindung wird auch mit einem Fördertechnikelement/Knoten der eingangs genannten Art gelöst, zusätzlich umfassend
- eine Steuerung, welche dazu eingerichtet ist, Förderobjekte unterschiedlicher Soll-Sortierreihenfolgen, welche entsprechend ihrer jeweiligen Soll-Sortierreihenfolge in einem Speicher der Steuerung und/oder in einem Speicher einer übergeordneten Steuerung gend/absteigend vektoriell verknüpft sind und welche das Fördertechnikelement / den Knoten passieren, entsprechend ihrer Ist-Reihenfolge aufsteigend/absteigend vektoriell zu verknüpfen und dies in der bereits gespeicherten vektoriellen Verknüpfung zu speichern und
- an einem Fördertechnikelement/Knoten wartende Förderobjekte in einer solchen Abfolge freizugeben, welche einen Ring mit einem gleichbleibenden Richtungssinn in der gemeinsamen vektoriellen Verknüpfung der Soll-Sortierreihenfolgen und der Ist-Reihenfolge vermeidet.

Die Aufgabe der Erfindung wird schließlich auch durch eine Förderanlage mit mehreren Fördertechnikelementen/Knoten der oben genannten Art gelöst, wobei zumindest eine Ankopplung für ein abgehendes Fördersegment des einen Fördertechnikelements/Knotens mit einem eingehenden Fördersegment eines anderen Fördertechnikelements/Knotens direkt oder indirekt verbunden ist.

Durch die vorgeschlagenen Maßnahmen wird eine einfache Vorschrift zum Leiten und Sortieren von Förderobjekten verwirklicht, die aber dennoch hohen Durchsatz ermöglicht. Konkret werden die Förderobjekte in einem ersten Schritt entsprechend einer Soll-Sortierreihenfolge vektoriell verknüpft. Passiert ein Förderobjekt ein Fördertechnikelement / einen Knoten, dann wird die dadurch bedingte Abhängigkeit zwischen den Förderobjekten ebenfalls in die vektorielle Verknüpfung eingetragen. Ein Förderobjekt wird dann freigegeben, wenn dessen Freigabe keinen Ring mit gleichbleibendem Richtungssinn in der vektoriellen Verknüpfung verursacht. Auf diese Weise kann sichergestellt werden, dass die Förderobjekte in einer gewünschten Reihenfolge an ihren Zielen ankommen.

Unter einem "Fördertechnikelement" ist im Rahmen der Erfindung jede Einrichtung zur Förderung und/oder Manipulation von Förderobjekten zu verstehen, welche Förderströme zusammenführt und über ein abgehendes Fördersegment oder mehrerer solcher Segmente weiterführt. Insbesondere kann das genannte Fördertechnikelement auch als Knoten aufgefasst werden, über den Förderströme geführt werden. Konkrete Beispiele für solche Fördertechnikelemente sind alle Arten von Einschleusern, Einmündungen von Nebenförderbahnen in eine Hauptförderbahn, Drehtische, aber auch Roboter zum Auslagern von Förderobjekten aus Lagern wie zum Beispiel Regalbediengeräte und autonome Förderfahrzeuge ("Shuttles") und Vertikalförderer wie Lifte und Paternoster. Alle diese Elemente können Förderströme von mehreren eingehenden Fördersegmenten auf einen Knoten konzentrieren. Im Falle von Liften und Paternoster werden Förderströme aus mehreren Ebenen auf einige wenige Förderströme (auf in der Regel niedrigeren Ebenen) konzentriert. Ein Regalbediengerät kann als Fördertechnikelement aufgefasst werden, das Förderströme von vielen Lagerplätzen auf (in der Regel) einen Ausgangsförderstrom konzentriert. Im Rahmen der Erfindung können die Begriffe "Fördertechnikelement" und "Knoten" synonymisch gebraucht werden.

Die "Fördersegmente" können generell auch als logische Fördersegmente gesehen werden und sind nicht unbedingt rein physisch zu betrachten. Beispielsweise kann ein Regalbediengerät als v-zu-w-Multiplexer betrachtet werden, wobei v die Anzahl der vom Regalbediengerät erreichten Lagerplätze angibt und w die Anzahl der vom Regalbediengerät gleichzeitig transportierten Objekte. Obwohl physisch nur ein einziges Regalbediengerät vorhanden ist, so kann dieses dennoch als logischer Knoten betrachtet werden, welcher v eingehende Fördersegmente und w abgehende Fördersegmente aufweist. Es kann auch vorgesehen sein, dass nur ein einziges Fördersegment von einem Knoten wegführt. Dieser Knoten entspricht dann einem v-zu-1-Multiplexer.

Unter einer "Anhalteeinrichtung" sind im Rahmen der Erfindung alle Elemente zum Anhalten eines Förderstroms zu verstehen. Beispielsweise fallen darunter Barrieren die in den Förderstrom eingeschoben oder eingeschwenkt werden können. Unter einer Anhalteeinrichtung können aber auch Förderbänder, Förderketten, Förderrollen und dergleichen verstanden werden, die angehalten werden können (also nicht nur lose gelagert sind). Diese Fördermittel dienen in der Regel sowohl zum Fördern als auch zum Anhalten von Förderobjekten.

Im Rahmen der Erfindung ist es sowohl vorstellbar, dass allen eingehenden Fördersegmenten je eine Anhalteeinrichtung zugeordnet ist als auch, dass nur einem Teil der eingehenden Fördersegmente eines Fördertechnikelements je eine Anhalteeinrichtung zugeordnet ist. Insbesondere kann vorgesehen sein, dass allen eingehenden Fördersegmenten, bis auf eines, je eine Anhalteeinrichtung zugeordnet ist.

Eine "Förderanlage" kann neben den bereits genannten Fördertechnikelementen/Knoten der oben genannten Art beispielsweise auch ein Lager, Regalbediengeräte, Lifte, Paternoster, Förderbänder, Rollenförderer, Kommissionier-Arbeitsplätze und dergleichen aufweisen.

Zur Feststellung der Ist-Position eines Förderobjekts auf einer Förderanlage können beispielsweise Sensoren und Lesegeräte eingesetzt werden, die eine Identifikation eines Förderobjekts ermöglichen. Beispielsweise sind dies Barcode-Lesegeräte, RFID-Lesegeräte (Radio Frequency Identification) sowie Videokameras. Aber auch Sensoren zur Messung einer physikalischen Eigenschaft eines Förderobjekts, wie zum Beispiel für Länge, Gewicht, Farbe und dergleichen, können grundsätzlich als Auslöseeinrichtung dienen, insbesondere wenn mehrere physikalische Eigenschaften gemessen werden, welche zur Identifikation eines Förderobjekts geeignet sind. Zum Beispiel kann dies die Kombination eines bestimmten Wertebereichs einer Objektlänge, eines bestimmten Wertebereichs einer Objektgewichts und eines bestimmten Wertebereichs einer Objektfarbe sein.

"Stromabwärts" bezeichnet im Rahmen der Erfindung generell Orte, welche einem Bezugspunkt in Förderrichtung der Förderobjekte nachfolgen. Ein Förderobjekt erreicht bei seiner Förderung also zeitlich zuerst den genannten Bezugspunkt und danach stromabwärts gelegene Orte beziehungsweise Positionen.

"Stromaufwärts" ist das Gegenteil von "stromabwärts". Ein Förderobjekt erreicht bei seiner Förderung also zeitlich zuerst stromaufwärts gelegene Orte beziehungsweise Positionen und danach den genannten Bezugspunkt.

Die "Förderrichtung" bezeichnet jene Richtung, in der sich die Förderobjekte auf der Förderanlage (im Normalbetrieb) bewegen.

Ein bewegtes Förderobjekt (und insbesondere mehrere bewegte Förderobjekte) bildet/bilden einen "Förderfluss" oder "Förderstrom".

An dieser Stelle wird auch angemerkt, dass die vektorielle Verknüpfung der Förderobjekte entsprechend ihrer Soll-Sortierreihenfolge respektive entsprechend ihrer Ist-Reihenfolge gleichbleibend erfolgen sollte. Das heißt, werden die Förderobjekte entsprechend ihrer Soll-Sortierreihenfolge aufsteigend vektoriell verknüpft, dann werden die Förderobjekte entsprechend ihrer Ist-Reihenfolge ebenfalls aufsteigend vektoriell verknüpft. Innerhalb der Soll-Sortierreihenfolge und der Ist-Reihenfolge findet darüber hinaus kein Wechsel statt. Das heißt die Förderobjekte sind in der Soll-Sortierreihenfolge und der Ist-Reihenfolge durchgehend aufsteigend verknüpft. Sinngemäß gilt das Gesagte auch für eine absteigende Verknüpfung. In diesem Fall sind die Förderobjekte in der Soll-Sortierreihenfolge und der Ist-Reihenfolge durchgehend absteigend vektoriell verknüpft.

Vorteilhafte Ausgestaltungen und Weiterbildungen der Erfindung ergeben sich nun im Folgenden aus den Unteransprüchen sowie aus der Beschreibung in Zusammenschau mit den Figuren.

Vorteilhaft ist es, wenn an einem Knoten wartende Förderobjekte nur in einer solchen Abfolge freigegeben werden, welche einen Ring mit einem gleichbleibenden Richtungssinn der vektoriellen Verknüpfung vermeidet. Dadurch kann eine geforderte Sortierreihenfolge fehlerfrei umgesetzt werden.

Besonders vorteilhaft ist es, wenn
- für zumindest jene an dem Fördertechnikelement/Knoten wartenden Förderobjekte Bewertungsparameter berechnet werden, welche einen Ring mit einem gleichbleibenden Richtungssinn in der vektoriellen Verknüpfung vermeiden,
- die Bewertungsparameter a) anhand einer Priorität einer Sortierreihenfolge berechnet werden, wobei höhere Prioritäten zu größeren/kleineren Bewertungsparametern führen, und/oder b) eines räumlichen und/oder zeitlichen Abstands zwischen den wartenden Förderobjekten und den jeweils in zumindest einer Sortierreihenfolge vorangehenden Förderobjekten berechnet werden, wobei dem Fördertechnikelement/Knoten stromabwärts gelegene Förderobjekte positiv/negativ und dem Fördertechnikelement/Knoten stromaufwärts gelegene Förderobjekte negativ/positiv gewertet werden und
- jenes Förderobjekt freigegeben wird, dem der größte/kleinste Bewertungsparameter zugeordnet ist.
Diese Ausführungsvariante eignet sich insbesondere dann, wenn an einem Fördertechnikelement/Knoten mehrere Förderobjekte warten, deren Freigabe keinen Ring mit gleichbleibenden Richtungssinn in der vektoriellen Verknüpfung erzeugen würde. Grundsätzlich kann eines der fraglichen Förderobjekte zufällig ausgewählt und freigegen wird, vorteilhaft ist es jedoch, wenn dazu ein Bewertungsparameter herangezogen wird. Einerseits kann dieser eine Priorität einer Sortierreihenfolge angeben (Fall a). Beispielsweise kann die Abarbeitung der Sortierreihenfolge respektive Versorgung eines Ziels wichtiger sein als die Abarbeitung einer anderen Sortierreihenfolge respektive als die Versorgung eines anderen Ziels und demzufolge höher priorisiert werden. Alternativ oder zusätzlich kann der Bewertungsparameter anhand eines räumlichen und/oder zeitlichen Abstands zwischen den wartenden Förderobjekten und den jeweils in zumindest einer Sortierreihenfolge vorangehenden Förderobjekten berechnet werden (Fall b). Ist das dem am Fördertechnikelement/Knoten wartenden Förderobjekt vorangehende Förderobjekt im Förderfluss schon weit vorangekommen, so sollte die Freigabe eines solchen Förderobjekts bevorzugt werden, um die Fertigstellung einer Sortierreihenfolge nicht zu verzögern. Dementsprechend kann ein Förderobjekt ohne negative Auswirkungen warten, wenn dessen Vorgänger im Förderfluss noch nicht weit vorangekommen ist oder sich sogar noch vor dem betreffenden Knoten befindet. Ein Gesamtbewertungsparameter kann beispielsweise als Summe oder Produkt der gemäß Fall a) und Fall b) bestimmten Bewertungsparameter definiert sein.

Die obige Berechnung des Bewertungsparameters eignet sich vor allem dann, wenn die beiden in Betracht gezogenen Förderobjekte (also das an dem besagten Knoten wartende Förderobjekt und in der Sortierreihenfolge vorangehende Förderobjekt) auf demselben Weg transportiert werden und/oder wenigstens auf ihrem Weg den besagten Knoten passieren.

An dieser Stelle wird angemerkt, dass die erläuterte Freigabe von Förderobjekten anhand eines Bewertungsparameters auch ohne die Merkmale der Patentansprüche 1 und 2, das heißt auch ohne die vektorielle Verknüpfung anwendbar ist. Darüber hinaus kann der Freigabe von Förderobjekten anhand eines Bewertungsparameters auch ein anderer Sortieralgorithmus übergeordnet werden.

Günstig ist es, wenn die genannte räumliche Entfernung anhand einer Länge eines Förderstroms bestimmt wird, dessen Enden zwischen einem wartenden Förderobjekt und dem in einer Sortierreihenfolge vorangehenden Förderobjekt liegen. Die Länge des genannten Förderstroms entspricht dem Weg, welchen das am Fördertechnikelement/Knoten wartende Förderobjekt zurücklegen muss, um zu der Position zu gelangen, an der sich das in der Sortierreihenfolge vorangehende Förderobjekt befindet. Die genannte Länge kann demzufolge in einer Längeneinheit, beispielsweise in Meter, angegeben werden.

Günstig ist es aber auch, wenn die genannte räumliche Entfernung anhand der Anzahl der Förderobjekte bestimmt wird, welche zwischen einem wartenden Förderobjekt und dem in einer Sortierreihenfolge vorangehenden Förderobjekt liegen. Auf diese Weise kann der Bewertungsparameter gegebenenfalls leichter berechnet werden.

Günstig ist es darüber hinaus, wenn die genannte räumliche Entfernung anhand der Anzahl der Fördertechnikelemente/Knoten bestimmt wird, welche zwischen einem wartenden Förderobjekt und dem in einer Sortierreihenfolge vorangehenden Förderobjekt liegen. Dies stellt eine weitere Möglichkeit dar, um den Bewertungsparameter auf relativ einfache Weise bestimmen zu können.

In einer weiteren günstigen Ausführungsvariante des vorgestellten Verfahrens wird die genannte räumliche Entfernung anhand der Anzahl der Vektoren in der vektoriellen Verknüpfung bestimmt, welche zwischen einem wartenden Förderobjekt und dem in einer Sortierreihenfolge vorangehenden Förderobjekt liegen. Dies stellt schließlich noch eine weitere Möglichkeit dar, um den Bewertungsparameter auf relativ einfache Weise bestimmen zu können.

Günstig ist es weiterhin, wenn die genannte zeitliche Entfernung anhand einer Dauer zum Durchlaufen eines Förderstroms bestimmt wird, dessen Enden zwischen einem wartenden Förderobjekt und dem in einer Sortierreihenfolge vorangehenden Förderobjekt liegen. Die genannte Dauer entspricht jener Zeitspanne, welche das am Fördertechnikelement/Knoten wartende Förderobjekt benötigt, um zu der Position zu gelangen, an der sich das in der Sortierreihenfolge vorangehende Förderobjekt befindet. Der genannte zeitliche Abstand kann somit in einer Zeiteinheit, beispielsweise in Sekunden, angegeben werden.

Besonders vorteilhaft ist es darüber hinaus, wenn
- für zumindest jene an dem Fördertechnikelement/Knoten wartenden Förderobjekte Bewertungsparameter berechnet werden, welche einen Ring mit einem gleichbleibenden Richtungssinn in der vektoriellen Verknüpfung vermeiden,
- die Bewertungsparameter a) anhand einer Priorität einer Sortierreihenfolge berechnet werden, wobei höhere Prioritäten zu größeren/kleineren Bewertungsparametern führen, und/oder b) anhand von Differenzen räumlicher und/oder zeitlicher Abstände berechnet werden, wobei eine Differenz als räumlicher und/oder zeitlicher Abstand eines wartenden Förderobjekts zu einem Ziel oder stromabwärts gelegenen Fördertechnikelement/Knoten weniger einem räumlichen und/oder zeitlichen Abstand des in einer Sortierreihenfolge vorangehenden Förderobjekts zu diesem Ziel oder zu diesem stromabwärts gelegenen Fördertechnikelement/Knoten definiert ist und
- jenes Förderobjekt freigegeben wird, dem der größte/kleinste Bewertungsparameter zugeordnet ist.

Diese Ausführungsvariante eignet sich ebenfalls insbesondere dann, wenn an einem Fördertechnikelement/Knoten mehrere Förderobjekte warten, deren Freigabe keinen Ring mit gleichbleibenden Richtungssinn in der vektoriellen Verknüpfung erzeugen würde. Dazu wird wieder ein Bewertungsparameter herangezogen, der auf einer Priorität einer Sortierreihenfolge basieren kann (Fall a). Beispielsweise kann die Abarbeitung der Sortierreihenfolge respektive Versorgung eines Ziels wichtiger sein als die Abarbeitung einer anderen Sortierreihenfolge respektive als die Versorgung eines anderen Ziels und demzufolge höher priorisiert werden. Alternativ oder zusätzlich kann der Bewertungsparameter anhand der oben genannten Differenz eines räumlichen und/oder zeitlichen Abstands berechnet werden (Fall b). Ist das dem am Fördertechnikelement/Knoten wartenden Förderobjekt vorangehende Förderobjekt im Förderfluss schon weit vorangekommen, so sollte die Freigabe eines solchen Förderobjekts bevorzugt werden, um die Fertigstellung einer Sortierreihenfolge nicht zu verzögern. Dementsprechend kann ein Förderobjekt ohne negative Auswirkungen warten, wenn dessen Vorgänger im Förderfluss noch nicht weit vorangekommen ist beziehungsweise sich noch weit vor dem nächsten Kreuzungspunkt der beiden Förderobjekte befindet. Ein Gesamtbewertungsparameter kann beispielsweise wiederum als Summe oder Produkt der gemäß Fall a) und Fall b) bestimmten Bewertungsparameter definiert sein.

Die obige Berechnung des Bewertungsparameters eignet sich vor allem dann, wenn die beiden in Betracht gezogenen Förderobjekte (also das an dem besagten Knoten wartende Förderobjekt und in der Sortierreihenfolge vorangehende Förderobjekt) nicht auf demselben Weg transportiert werden und/oder den besagten Knoten auf ihrem Weg nicht passieren.

An dieser Stelle wird angemerkt, dass die erläuterte Freigabe von Förderobjekten anhand eines Bewertungsparameters auch ohne die Merkmale der Patentansprüche 1 und 2, das heißt auch ohne die vektorielle Verknüpfung anwendbar ist. Darüber hinaus kann der Freigabe von Förderobjekten anhand eines Bewertungsparameters auch ein anderer Sortieralgorithmus übergeordnet werden.

Günstig ist es, wenn die genannte Differenz anhand einer Länge eines Förderstroms bestimmt wird, dessen Enden zwischen dem wartenden Förderobjekt und dem besagten Ziel beziehungsweise dem besagten stromabwärts gelegenen Fördertechnikelement/Knoten liegen, und jener Länge eines Förderstroms bestimmt wird, dessen Enden zwischen dem in einer Sortierreihenfolge vorangehenden Förderobjekt und dem besagten Ziel beziehungsweise dem besagten stromabwärts gelegenen Fördertechnikelement/Knoten liegen. Die Differenz entspricht also dem Weg, welchen das am Fördertechnikelement/Knoten wartende Förderobjekt zurücklegen muss, um gleich weit von einer Referenzposition (gemeinsames Ziel oder stromabwärts gelegenes Fördertechnikelement) entfernt zu sein wie das in der Sortierreihenfolge vorangehenden Förderobjekt. Die genannte Differenz kann demzufolge in einer Längeneinheit, beispielsweise in Meter, angegeben werden.

Günstig ist es auch, wenn die genannte Differenz anhand der Anzahl der Förderobjekte bestimmt wird, welche zwischen dem wartenden Förderobjekt und dem besagten Ziel beziehungsweise dem besagten stromabwärts gelegenen Fördertechnikelement/Knoten liegen, und jener Anzahl der Förderobjekte bestimmt wird, welche zwischen dem in einer Sortierreihenfolge vorangehenden Förderobjekt und dem besagten Ziel beziehungsweise dem besagten stromabwärts gelegenen Fördertechnikelement/Knoten liegen. Auf diese Weise kann der Bewertungsparameter gegebenenfalls leichter berechnet werden.

Günstig ist es darüber hinaus, wenn die genannte Differenz anhand der Anzahl der Fördertechnikelemente/Knoten bestimmt wird, welche zwischen dem wartenden Förderobjekt und dem besagten Ziel beziehungsweise dem besagten stromabwärts gelegenen Fördertechnikelement/Knoten liegen, und jener Anzahl der Fördertechnikelemente/Knoten bestimmt wird, welche zwischen dem in einer Sortierreihenfolge vorangehenden Förderobjekt und dem besagten Ziel beziehungsweise dem besagten stromabwärts gelegenen Fördertechnikelement/Knoten liegen. Dies stellt eine weitere Möglichkeit dar, um den Bewertungsparameter auf relativ einfache Weise bestimmen zu können.

In einer weiteren günstigen Ausführungsvariante des vorgestellten Verfahrens wird die genannte Differenz anhand der Anzahl der Vektoren in der vektoriellen Verknüpfung bestimmt, welche zwischen dem wartenden Förderobjekt und dem besagten Ziel beziehungsweise dem besagten stromabwärts gelegenen Fördertechnikelement/Knoten liegen, und anhand jener Anzahl der Vektoren, welche zwischen dem in einer Sortierreihenfolge vorangehenden Förderobjekt und dem besagten Ziel beziehungsweise dem besagten stromabwärts gelegenen Fördertechnikelement/Knoten liegen. Dies stellt schließlich noch eine weitere Möglichkeit dar, um den Bewertungsparameter auf relativ einfache Weise bestimmen zu können.

Günstig ist es weiterhin, wenn die genannte Differenz anhand einer Dauer zum Durchlaufen eines Förderstroms bestimmt wird, dessen Enden zwischen dem wartenden Förderobjekt und dem besagten Ziel beziehungsweise dem besagten stromabwärts gelegenen Fördertechnikelement/Knoten liegen, und jener Dauer eines Förderstroms bestimmt wird, dessen Enden zwischen dem in einer Sortierreihenfolge vorangehenden Förderobjekt und dem besagten Ziel beziehungsweise dem besagten stromabwärts gelegenen Fördertechnikelement/Knoten liegen. Die Differenz entspricht also jener Zeitspanne, welche das am Fördertechnikelement/Knoten wartende Förderobjekt benötigt, um (zeitlich) gleich lang zu einer Referenzposition (gemeinsames Ziel oder stromabwärts gelegenes Fördertechnikelement) zu benötigen wie das in der Sortierreihenfolge vorangehende Förderobjekt. Die genannte Differenz kann demzufolge in einer Zeiteinheit, beispielsweise in Sekunden, angegeben werden.

Besonders vorteilhaft ist es weiterhin, wenn
- ein an einem Knoten wartendes Förderobjekt freigegeben wird, welches einen Ring mit einem gleichbleibenden Richtungssinn der vektoriellen Verknüpfung erzeugt, wenn a) der zugeordnete Bewertungsparameter einen Schwellwert überschreitet/unterschreitet und wenn b) ein Platz in einem/einer dem Knoten stromabwärts nachgelagerten Puffer, Sequenzer, Ausweichstrecke oder Rückkopplung oder eine Auffächerung frei ist oder frei wird, wenn das besagte Förderobjekt planmäßig an dem Puffer, dem Sequenzer, der Ausweichstrecke oder der Rückkopplung eintrifft und
- das Förderobjekt dort hinein transportiert wird.
Insbesondere werden für alle an dem Fördertechnikelement/Knoten wartenden Förderobjekte Bewertungsparameter berechnet oder wenigstens so lange, bis eine Überschreitung/Unterschreitung des Schwellwerts durch einen Bewertungsparameter festgestellt wird. Bei dieser Variante des vorgestellten Verfahrens können also Fehler in einer Sortierreihenfolge bewusst zugelassen und zu einem späteren Zeitpunkt wieder korrigiert werden, wenn der Bewertungsparameter für das betreffende Objekt sehr hoch ist und der Weitertransport des Objekts daher wichtig ist. Unschärfen in einer Reihenfolge werden bei dieser Ausführungsvariante also zugunsten eines hohen Durchsatzes bewusst zugelassen. Dadurch ist zwar eine Vertauschung innerhalb der gebildeten Ist-Reihenfolge und damit einhergehend eine Abweichung von der Soll-Reihenfolge möglich, allerdings sinkt damit auch die Wahrscheinlichkeit für Blockaden in der Förderanlage, und es steigt der Durchsatz. Gegebenenfalls können die Förderobjekte vor Erreichen des Ziels auch eine Sortierstufe durchlaufen, um eine exakte Ist-Reihenfolge zu erreichen. Durch die Vorsortierung kann diese Sortierstufe jedoch klein gehalten werden und benötigt daher nur wenig Bauraum.

Grundsätzlich kann der Fall eintreten, dass sowohl ein erstes Förderobjekt aufgrund einer Überschreitung/Unterschreitung des Schwellwerts durch einen Bewertungsparameter als auch ein anderes, zweites Förderobjekt anhand einer Priorität einer Sortierreihenfolge (siehe Fall "a" weiter oben) und/oder eines räumlichen und/oder zeitlichen Abstands (siehe Fall "b" weiter oben) freizugeben wäre. Das vorgestellte Verfahren kann so ausgebildet sein, dass das erste Förderobjekt priorisiert freigegeben wird und das zweite Förderobjekt demzufolge die Freigabe des ersten Förderobjekts abwartet. Demzufolge kann auch vorgesehen sein, dass Bewertungsparameter zuerst für jene Förderobjekte berechnet werden, welche einen Ring mit einem gleichbleibenden Richtungssinn der vektoriellen Verknüpfung erzeugen, und Bewertungsparameter für jene Förderobjekte, welche keinen Ring mit einem gleichbleibenden Richtungssinn der vektoriellen Verknüpfung erzeugen, nur dann berechnet werden, wenn kein erstes Förderobjekt freizugeben ist. Das vorgestellte Verfahren kann aber auch so ausgebildet sein, dass das zweite Förderobjekt priorisiert freigegeben wird und das erste Förderobjekt demzufolge die Freigabe des zweiten Förderobjekts abwartet. Demzufolge kann auch vorgesehen sein, dass Bewertungsparameter zuerst für jene Förderobjekte berechnet werden, welche keinen Ring mit einem gleichbleibenden Richtungssinn der vektoriellen Verknüpfung erzeugen, und Bewertungsparameter für jene Förderobjekte, welche einen Ring mit einem gleichbleibenden Richtungssinn der vektoriellen Verknüpfung erzeugen, nur dann berechnet werden, wenn kein zweites Förderobjekt freizugeben ist.

An dieser Stelle wird angemerkt, dass die erläuterte Freigabe von Förderobjekten, welche zu einem temporären Fehler in der Sortierreihenfolge führt, auch ohne die Merkmale der Patentansprüche 1 bis 14, das heißt auch ohne die vektorielle Verknüpfung und/oder ohne die vorgestellte Berechnung des Bewertungsparameters anwendbar ist. Darüber hinaus kann der zu einem temporären Fehler in der Sortierreihenfolge führenden Freigabe von Förderobjekten auch ein anderer Sortieralgorithmus und/oder eine andere Methode zur Priorisierung von Förderobjekten beziehungsweise eine andere Methode zur Berechnung eines Bewertungsparamters übergeordnet werden.

Günstig ist es bei der vorstehenden Variante, wenn der den genannten Ring schließende Vektor
- nicht in der vektoriellen Verknüpfung eingetragen wird oder
- aus der vektoriellen Verknüpfung gelöscht wird, wenn das besagte Förderobjekt in den Puffer, den Sequenzer, die Ausweichstrecke oder die Rückkopplung hinein transportiert wird.
Dadurch wird sichergestellt, dass der auf der vektoriellen Verknüpfung basierende Sortieralgorithmus korrekt ausgeführt wird, sobald sich das den Sortierfehler verursachende Förderobjekt im Puffer, im Sequenzer, in der Ausweichstrecke oder in der Rückkopplung befindet.

Unter einem "Puffer" ist im Rahmen der Erfindung ein Element der Fördertechnik zur temporären Aufnahme eines Förderobjekts oder mehrerer Förderobjekte zu verstehen. Das Ausschleusen aus dem Puffer erfolgt je nach Bauart und Belegung nicht zwangsläufig wahlfrei.

Ein "Sequenzer" ist ein Spezialfall eines Puffers mit wahlfreiem Zugriff. Das heißt, dass jedes beliebige im Sequenzer zwischengelagerte Förderobjekt unabhängig von anderen zwischengelagerten Förderobjekten in einen Förderstrom eingeschleust werden kann.

Unter einer "Ausweichstrecke" kann ein teilweise parallel geführter Förderstrom verstanden werden.

Bei einer "Rückkopplung" sind schließlich Eingänge und Ausgänge wenigstens zweier Fördertechnikelemente/Knoten direkt oder indirekt wechselseitig miteinander verbunden. "Direkt" bedeutet in obigem Zusammenhang, dass die Ankopplung für ein abgehendes Fördersegment des einen Fördertechnikelements ohne Zwischenschaltung anderer Elemente mit einem eingehenden Fördersegment eines anderen Fördertechnikelements verbunden ist, "indirekt" das Gegenteil.

Ein gemeinsames Element von Puffer, Sequenzer, Ausweichstrecke und Rückkopplung ist eine Auffächerung oder Aufteilung des Förderstroms. Ein entsprechendes Fördertechnikelement / entsprechender Knoten weist daher mehrere abgehende Fördersegmente auf. Ein weiterer Grund für eine Auffächerung/Aufteilung des Förderstroms kann dadurch gegeben sein, dass ein abgehender Förderstrom in verschiedenen Bereiche einer Förderanlage beziehungsweise zu verschiedenen Zielen (insbesondere Kommissionier-Arbeitsplätzen) geleitet wird.

Vorteilhaft ist es auch, wenn zum Bilden einer Sortierreihenfolge für ein zu versorgendes Ziel oder mehrerer solcher Reihenfolgen für mehrere zu versorgende Ziele in einer Förderanlage mit mehreren Fördertechnikelementen/Knoten der genannten Art, bei dem die zumindest eine Ankopplung für ein abgehendes Fördersegment des einen Fördertechnikelements/Knotens mit einem eingehenden Fördersegment eines anderen Fördertechnikelements/Knotens direkt oder indirekt verbunden ist, die Fördertechnikelemente/Knoten schreibend und/oder lesend auf eine gemeinsame vektorielle Verknüpfung der Förderobjekte zugreifen. Dadurch liegen den Fördertechnikelementen/Knoten jeweils aktuelle Informationen über die Position und Abfolge der Förderobjekte vor. Sind die Steuerungen der Fördertechnikelemente/Knoten durch mehrere Instanzen eines Software-Algorithmus in einem Computer realisiert, dann kann die gemeinsame vektorielle Verknüpfung der Förderobjekte insbesondere auf diesem Computer gespeichert sein.

In einer weiteren vorteilhaften Variante des Verfahrens weisen mehrere Förderobjekte die gleiche Ordnungsnummer in der Sortierreihenfolge auf. Auf diese Weise ist es möglich, mehrere in einer Sortierreihenfolge angeordnete Gruppen von Förderobjekten zu bilden, innerhalb derer die Förderobjekte jedoch ungeordnet angeordnet sein können. Das heißt, die Förderobjekte haben eine nicht notwendigerweise eindeutige Ordnungsnummer. Beispielsweise kann die Sortierreihenfolge mehrere Förderobjekte mit der Ordnungsnummer 3 aufweisen. Diese Förderobjekte werden durch das vorgestellte Verfahren nach der Gruppe 2 aber vor der Gruppe 4 angeordnet. Innerhalb der Gruppe 3 ist die Anordnung der Förderobjekte jedoch beliebig. Diese Vorgangsweise ist etwa dann zweckmäßig, wenn mehrere gleichartige Objekte (z.B. Wasserflaschen) in einem Förderstrom an einer bestimmten Position gruppiert werden sollen, die Position eines bestimmten Objekts innerhalb dieser Gruppe aber gleichgültig ist.

Besonders vorteilhaft ist es, wenn zumindest jene Verfahrensschritte, welche einer Entscheidung über eine Freigabe eines Förderobjekts zugeordnet sind, bis auf die Berücksichtigung der vektoriellen Verknüpfung unabhängig von allen anderen Fördertechnikelementen/Knoten und/oder unabhängig von einer zentralen Steuerung ausgeführt werden. Dadurch kann die Kommunikation und damit der Aufwand für Kommunikationsleitungen zwischen Fördertechnikelementen gering gehalten werden.

Besonders vorteilhaft ist es auch, wenn eine Programmlogik im Hinblick auf die Freigabe eines Förderobjekts in allen Fördertechnikelementen/Knoten identisch aufgebaut ist, beziehungsweise wenn die Verfahrensschritte im Hinblick auf die Freigabe eines Förderobjekts in allen Fördertechnikelementen/Knoten in identischer Weise ausgeführt werden. Auf diese Weise kann der Aufwand für die Herstellung beziehungsweise Programmierung der Steuerung für eine Förderanlage insgesamt gering gehalten werden, da diese aus mehreren identischen Modulen aufgebaut ist. Auch der Aufwand für eine eventuelle Fehlersuche kann dadurch klein gehalten werden.

Günstig ist darüber hinaus auch ein Verfahren zum Betrieb einer Förderanlage der genannten Art mit einem vorgelagerten Lager mit Lagerplätzen für Förderobjekte, wobei das Fördertechnikelement als Auslagerungsroboter für das Lager ausgebildet ist. Wie bereits erwähnt können solche Roboter, welche zum Beispiel als Regalbediengeräte, autonome Förderfahrzeuge ("Shuttle"), Lifte oder Paternoster ausgebildet sind, Förderströme von mehreren eingehenden Fördersegmenten auf einen Knoten konzentrieren. Beispielsweise kann ein Regalbediengerät als v-zu-w-Multiplexer betrachtet werden, wobei v die Anzahl der vom Regalbediengerät erreichten Lagerplätze angibt und w die Anzahl der vom Regalbediengerät gleichzeitig transportierten Objekte.

Vorteilhaft ist auch ein Verfahren zum Betrieb einer Förderanlage der genannten Art mit einem vorgelagerten Lager mit Lagerplätzen für Förderobjekte, bei dem Förderobjekte im Hinblick auf die Ziele und in Bezug auf eine Sortierreihenfolge für ein zu versorgendes Ziel geordnet ausgelagert werden. Das bedeutet, dass zuerst Förderobjekte für das Ziel mit der niedrigsten Position in einer Reihenfolge ausgelagert werden, dann die Förderobjekte mit der zweitniedrigsten Position usw. Zudem werden die Förderobjekte für ein bestimmtes Ziel ebenfalls geordnet ausgelagert. Befinden sich in dem Lager, aus dem mit Hilfe eines Fördertechnikelements ausgelagert wird, zum Beispiel die Förderobjekte 3 und 5 des Ziels A und die Förderobjekte 1 und 7 des Ziels B, so werden die Förderobjekte in der Reihenfolge A3, A5, B1, B7 ausgelagert. Bei diesem Beispiel wird angenommen, dass sich die in der Reihenfolge fehlenden Förderobjekte (also z.B. A1, A2, A4, B2, B3, usw.) in anderen Lagern befinden, die von anderen Fördertechnikelementen ausgelagert werden. Auf diese Weise kann insgesamt ein hoher Ordnungsgrad der auf der Fördertechnik vorhandenen Förderströme erzielt werden.

Vorteilhaft ist es aber auch, wenn Förderobjekte in Bezug auf eine Sortierreihenfolge für ein zu versorgendes Ziel geordnet, im Hinblick auf die Ziele jedoch chaotisch beziehungsweise nicht notwendigerweise geordnet aus dem Lager ausgelagert werden. Bezogen auf das zuvor genannte Beispiel bedeutet dies, dass die Förderobjekte beispielsweise auch in der Reihenfolge B1, A3, A5, B7 oder beispielsweise auch in der Reihenfolge B1, A3, B7, A5 ausgelagert werden können. Durch die ungeordnete Auslagerung auf Zielebene kann der Durchsatz bei der Auslagerung erhöht werden, beispielsweise wenn bei der Auslagerung Transportwege minimiert werden.

Günstig ist es weiterhin, wenn wenigstens zwei Fördertechnikelemente direkt oder indirekt ringförmig miteinander verbunden sind, beziehungsweise wenn wenigstens ein Teilförderstrom ringförmig über die genannten Fördertechnikelemente geführt wird. Mit anderen Worten wird in dem Netz verbundener Fördertechnikelemente eine Rückkopplung vorgesehen. Dazu wird wenigstens ein abgehendes Fördersegment wenigstens eines Fördertechnikelements mit wenigstens einem eingehenden Fördersegment wenigstens eines anderen, stromaufwärts angeordneten Fördertechnikelements verbunden. Auf diese Weise kann der Ordnungsgrad der transportierten Förderobjekte in mehreren Durchläufen erhöht werden, beziehungsweise können Lücken in der Reihenfolge schrittweise aufgefüllt werden. An dieser Stelle wird angemerkt, dass die Begriffe "stromabwärts" und "stromaufwärts" in Bezug auf einen ringförmigen Teilstrom synonymisch gebraucht werden können.

In einer weiteren vorteilhaften Variante des Verfahrens werden die Freigaben pro Zeiteinheit von einer übergeordneten Steuerung überwacht, und es wird jene Anhalteeinrichtung freigegeben, an welcher das Förderobjekt mit der niedrigsten Ordnungsnummer wartet, wenn für die Freigaben pro Zeiteinheit ein Schwellwert unterschritten wird. Dadurch wird vermieden, dass es auf der Förderanlage durch eine ungünstige Anordnung der Förderobjekte zu längerfristigen Blockaden kommt. Anstelle das Förderobjekt mit der niedrigsten Ordnungsnummer freizugeben, kann eine Freigabe beispielsweise auch chaotisch beziehungsweise zufällig erfolgen. Vorteilhaft wird diese Variante des Verfahrens mit einem/einer dem Knoten stromabwärts nachgelagerten Puffer, Sequenzer, Ausweichstrecke oder Rückkopplung oder Auffächerung im Förderstrom kombiniert, um den gewünschten Ordnungsgrad der auf der Förderanlage transportierten Förderobjekte wieder herzustellen. Vorteilhaft ist es auch, wenn der Schwellwert entsprechend der Anzahl der auf der Förderanlage befindlichen Objekte adaptiert wird. Das heißt, dass der Schwellwert erhöht wird, wenn die Anzahl der transportierten Objekte steigt und umgekehrt. Damit wird vermieden, dass eine sinkende Anzahl von Freigaben, welche durch eine geringe Anzahl an transportierten Förderobjekten begründet ist, als Blockade fehlinterpretiert wird. Beispielsweise kann so ein Zustand beim Starten eines Kommissionierauftrags eintreten oder beispielsweise auch wenn dieser nahezu abgearbeitet ist. In beiden Fällen befinden sich vergleichsweise wenige Objekte auf der Förderanlage weil sie eben zur Mehrzahl noch im Lager oder bereits in Versandbehälter verladen sind. Vorteilhaft ist es auch, wenn ein Pausieren der Entnahme der Förderobjekte an einem Ziel berücksichtigt wird. Insbesondere beim manuellen Kommissionieren kommt es zu zwangsläufigen Unterbrechungen des Arbeitsablaufs, beispielsweise wenn ein Arbeiter seine Pause antritt oder die Toilette aufsucht. In diesem Fall kann es ebenfalls zu einem Rückgang der Freigaben pro Zeiteinheit kommen, der nicht durch eine Blockade begründet ist.

In einer weiteren vorteilhaften Variante des Verfahrens werden die Freigaben pro Zeiteinheit je zu versorgendem Ziel von einer übergeordneten Steuerung überwacht, und es wird jene Anhalteeinrichtung freigegeben, an welcher das Förderobjekt mit der niedrigsten Ordnungsnummer des betreffenden Ziels wartet, wenn für die dem betreffenden Ziel zugeordneten Freigaben pro Zeiteinheit ein Schwellwert unterschritten wird. Das zu der zuvor offenbarten Variante Gesagte gilt sinngemäß auch für diese Variante. Im Unterschied werden die Freigaben nicht global betrachtet, sondern gesondert je Ziel.

An dieser Stelle wird angemerkt, dass sich die zum erfindungsgemäßen Verfahren offenbarten Varianten und die daraus resultierenden Vorteile sinngemäß auf das erfindungsgemäße Fördertechnikelement respektive die erfindungsgemäße Förderanlage beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Beispiel eines Fördertechnikelements/Knotens;
- Fig. 2: wie Fig. 1, jedoch mit Sensoren / Leseeinrichtungen in den eingehenden Fördersegmenten;
- Fig. 3: ein schematisch dargestelltes Lager und Regalbediengerät in Schrägansicht;
- Fig. 4: das Lager aus Fig. 3 in Vorderansicht;
- Fig. 5: eine logische Repräsentation des Regalbediengeräts aus Fig. 3;
- Fig. 6: eine logische Repräsentation eines Regalbediengeräts, welches mehrere Förderobjekte gleichzeitig aufnehmen kann;
- Fig. 7: ein Lager mit einem daran angeschlossenen Lift und mit darin autonom fahrenden Förderfahrzeugen;
- Fig. 8: eine logische Repräsentation der Anordnung aus Fig. 7;
- Fig. 9: wie Fig. 7, nur mit einem Paternoster anstelle des Lifts;
- Fig. 10: eine logische Repräsentation der Anordnung aus Fig. 9;
- Fig. 11: eine beispielhafte vektorielle Verknüpfung mit drei eingezeichneten Soll-Sortierreihenfolgen;
- Fig. 12: die vektorielle Verknüpfung aus Fig. 11 zu einem späteren Zeitpunkt mit zwei markierten Förderobjekten, die an einem ersten Fördertechnikelement/Knoten angehalten wurden;
- Fig. 13: die der vektoriellen Verknüpfung aus Fig. 12 zugeordnete physische Anordnung von Förderobjekten im Bereich des ersten Fördertechnikelements/Knotens;
- Fig. 14: die vektorielle Verknüpfung aus Fig. 12 nachdem der erste Knoten von einem der beiden Förderobjekte passiert wurde;
- Fig. 15: die der vektoriellen Verknüpfung aus Fig. 14 zugeordnete physische Anordnung der Förderobjekte im Bereich des ersten Fördertechnikelements/Knotens;
- Fig. 16: die vektorielle Verknüpfung zu einem späteren Zeitpunkt mit zwei markierten Förderobjekten, die an einem zweiten, stromabwärts gelegenen Fördertechnikelement/Knoten warten;
- Fig. 17: die der vektoriellen Verknüpfung aus Fig. 16 zugeordnete physische Anordnung der Förderobjekte im Bereich des zweiten Fördertechnikelements/Knotens;
- Fig. 18: die vektorielle Verknüpfung aus Fig. 16 nachdem der zweite Knoten von einem der wartenden Förderobjekte passiert wurde;
- Fig. 19: die der vektoriellen Verknüpfung aus Fig. 18 zugeordnete physische Anordnung der Förderobjekte im Bereich des zweiten Fördertechnikelements/Knotens;
- Fig. 20: die vektorielle Verknüpfung zu einem späteren Zeitpunkt mit zwei markierten Förderobjekten, die an einem dritten, stromabwärts gelegenen Fördertechnikelement/Knoten warten;
- Fig. 21: die der vektoriellen Verknüpfung aus Fig. 20 zugeordnete physische Anordnung der Förderobjekte im Bereich des dritten Fördertechnikelements/Knotens;
- Fig. 22: die vektorielle Verknüpfung aus Fig. 20 nachdem der dritte Knoten von einem der wartenden Förderobjekte passiert wurde und in der vektoriellen Verknüpfung einen Ring mit gleichbleibendem Richtungssinn verursacht wird;
- Fig. 23: die der vektoriellen Verknüpfung aus Fig. 22 zugeordnete physische Anordnung der Förderobjekte im Bereich des dritten Fördertechnikelements/Knotens;
- Fig. 24: die vektorielle Verknüpfung aus Fig. 20 nachdem der dritte Knoten von einem der wartenden Förderobjekte passiert wurde, ohne in der vektoriellen Verknüpfung einen Ring mit gleichbleibendem Richtungssinn zu verursachen;
- Fig. 25: die der vektoriellen Verknüpfung aus Fig. 24 zugeordnete physische Anordnung der Förderobjekte im Bereich des dritten Fördertechnikelements/Knotens;
- Fig. 26: eine vektorielle Verknüpfung in einem Zustand, in dem drei unterschiedlich priorisierte Förderobjekte an einem Knoten warten;
- Fig. 27: die der vektoriellen Verknüpfung aus Fig. 26 zugeordnete physische Anordnung der Förderobjekte im Bereich des Fördertechnikelements/Knotens;
- Fig. 28: die vektorielle Verknüpfung aus Fig. 26 nachdem der Knoten von einem der wartenden Förderobjekte passiert wurde;
- Fig. 29: die der vektoriellen Verknüpfung aus Fig. 28 zugeordnete physische Anordnung der Förderobjekte im Bereich des Fördertechnikelements/Knotens;
- Fig. 30: die vektorielle Verknüpfung aus Fig. 26 nachdem der Knoten von allen drei Förderobjekten passiert wurde;
- Fig. 31: die der vektoriellen Verknüpfung aus Fig. 30 zugeordnete physische Anordnung der Förderobjekte im Bereich des Fördertechnikelement/Knotens;
- Fig. 32: ähnlich wie Fig. 26, jedoch mit einer anderen Methode zur Bestimmung eines Bewertungsparameters;
- Fig. 33: ähnlich wie Fig. 27, jedoch mit einer anderen Methode zur Bestimmung eines Bewertungsparameters;
- Fig. 34: die vektorielle Verknüpfung aus Fig. 22 in einem Zustand, in dem das einen Fehler in einer Sortierreihenfolge verursachende Förderobjekt in eine Ausweichstrecke transportiert wurde;
- Fig. 35: die der vektoriellen Verknüpfung aus Fig. 34 zugeordnete physische Anordnung der Förderobjekte im Bereich des Fördertechnikelements/Knotens;
- Fig. 36: die vektorielle Verknüpfung aus Fig. 34, nachdem der zusammenführende Knoten von einigen Förderobjekten passiert wurde;
- Fig. 37: die der vektoriellen Verknüpfung aus Fig. 36 zugeordnete physische Anordnung der Förderobjekte im Bereich des Fördertechnikelements/Knotens;
- Fig. 38: die vektorielle Verknüpfung aus Fig. 34, nachdem der zusammenführende Knoten von allen Förderobjekten passiert wurde und die Sortierreihenfolge korrigiert wurde;
- Fig. 39: die der vektoriellen Verknüpfung aus Fig. 38 zugeordnete physische Anordnung der Förderobjekte im Bereich des Fördertechnikelements/Knotens;
- Fig. 40: ein Beispiel einer vektoriellen Verknüpfung mit mehreren Förderobjekten mit gleicher Ordnungsnummer;
- Fig. 41: die der vektoriellen Verknüpfung aus Fig. 40 zugeordnete physische Anordnung der Förderobjekte im Bereich des Fördertechnikelements/Knotens;
- Fig. 42: ein Beispiel einer etwas komplexeren Förderanlage;
- Fig. 43: ein weiteres Beispiel einer etwas komplexeren Förderanlage, jedoch ohne Rücckopplung und Sortierstufe;
- Fig. 44: ähnlich wie Fig. 43, jedoch mit zusätzlichen Ausweichstrecken;
- Fig. 45: ähnlich wie Fig. 1, jedoch mit einer nach einem anderen Sortierverfahren arbeitenden Steuerung und
- Fig. 46: ähnlich wie Fig. 42, jedoch mit Fördertechnikelementen/Knoten entsprechend Fig. 45.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

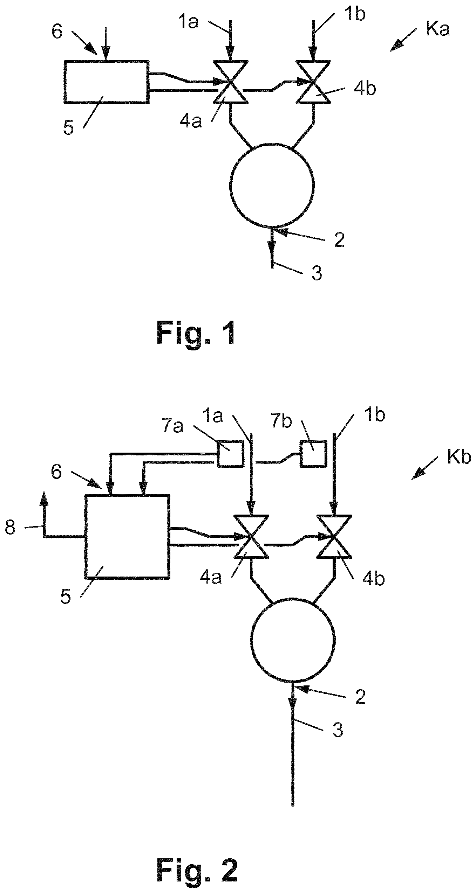

Fig. 1 zeigt ein erstes Beispiel eines Fördertechnikelements Ka zum Bündeln von Förderströmen. Das Fördertechnikelement Ka umfasst zwei eingehende Fördersegmente 1a, 1b, eine Ankopplung 2 für ein abgehendes Fördersegment 3, auf das die eingehenden Fördersegmente 1a, 1b zusammengeführt werden, und mehrere Anhalteeinrichtungen 4a, 4b zum Anhalten eines Förderflusses auf den eingehenden Fördersegmenten 1a, 1b. Wegen der genannten Zusammenführung kann das Fördertechnikelement Ka auch als Knoten aufgefasst werden.

Zudem umfasst das Fördertechnikelement Ka eine Steuerung 5, welche ausgangsseitig mit den genannten Anhalteeinrichtungen 4a, 4b verbunden ist. An einem Eingang 6 ist die Steuerung 5 optional mit einer übergeordneten zentralen Steuerung verbunden, so wie dies in der Fig. 1 mit einem eingangsseitigen Pfeil dargestellt ist.

In dem in Fig. 1 dargestellten Beispiel sind lediglich zwei eingehende Fördersegmente 1a, 1b vorgesehen. Denkbar ist natürlich auch, dass mehr als zwei eingehende Fördersegmente 1a, 1b vorgesehen sind. Desgleichen ist es vorstellbar, dass abweichend von der Darstellung der Fig. 1 mehr als eine Ankopplung 2 und mehr als ein abgehendes Fördersegment 3 vorgesehen sind. Denkbar ist auch, dass die Steuerung weitere Eingänge für die Verarbeitung von Signalen weiterer Steuerungen aufweist, insbesondere von weiteren Steuerungen 5 weiterer Knoten K.

An dieser Stelle wird auch angemerkt, dass es sich bei der Fig. 1 um eine rein symbolhafte Darstellung des Fördertechnikelements Ka handelt. Beispielsweise sind die Anhalteeinrichtungen 4a, 4b als Ventile dargestellt. Selbstverständlich ist dies nicht einschränkend zu verstehen, sondern als Anhalteeinrichtung 4a, 4b können alle Elemente zum Anhalten eines Förderstroms eingesetzt werden. Beispielsweise können darunter Barrieren oder Schranken verstanden werden, die in den Förderstrom eingeschoben oder eingeschwenkt werden können. Unter einer Anhalteeinrichtung 4a, 4b können aber auch Förderbänder, Förderketten, Förderrollen und dergleichen verstanden werden, die angehalten werden können. Da diese Fördermittel in der Regel sowohl zum Fördern als auch zum Anhalten von Förderobjekten 17 dienen, ist in diesem Fall eine scharfe Abgrenzung zwischen den Anhalteeinrichtungen 4a, 4b und den eingehenden Fördersegmenten 1a, 1b nur schwer oder nicht möglich. Das eingehende Fördersegment 1a, 1b erfüllt daher in diesem Fall eine Doppelfunktion.

Vorstellbar ist es auch, dass - abweichend von der Darstellung in der Fig. 1 - nicht allen eingehenden Fördersegmenten 1a, 1b je eine Anhalteeinrichtung 4a, 4b zugeordnet ist. Beispielsweise kann die Anhalteeinrichtung 4b entfallen, sodass ein auf dem Fördersegment 1b eingehendes Förderobjekt 17 immer beziehungsweise priorisiert weitergeleitet wird.

Fig. 2 zeigt ein weiteres Beispiel für ein Fördertechnikelement Kb, das insbesondere verdeutlichen soll, dass die Steuerung 5 nicht auf die Ansteuerung der Anhalteeinrichtungen 4a, 4b beschränkt ist, sondern auch andere Aufgaben übernehmen kann. In der Fig. 2 ist die Steuerung 5 dazu mit Sensoren und/oder Leseeinrichtungen 7a, 7b verbunden, mit deren Hilfe die an den Fördersegmenten 1a, 1b eingehenden Förderobjekte 17 identifiziert und deren Ist-Rang beziehungsweise Ist-Position in einer Sortierreihenfolge bestimmt werden kann. Darüber hinaus ist mit der Ausgangsleitung 8 angedeutet, dass die genannte Erfassung eines eingehenden Förderobjekts 17 auch an andere Fördertechnikelemente Ka, Kb beziehungsweise auch an eine übergeordnete Steuerung gemeldet werden kann.

Generell kann unter einem "Fördertechnikelement" respektive "Knoten" jede Einrichtung zur Förderung und/oder Manipulation von Förderobjekten 17 verstanden werden, welche Förderströme zusammenführt und über ein abgehendes Fördersegment oder mehrere solche Segmente weiterführt. Für beispielsweise Einschleuser, Einmündungen von Nebenförderbahnen in eine Hauptförderbahn, Drehtische leuchtet dies basierend auf den Figuren 1 und 2 unmittelbar ein. Fördertechnikelemente, welche Förderströme zusammenführen, können aber beispielsweise auch durch Roboter zum Auslagern von Förderobjekten 17 aus einem Lager gebildet sein.

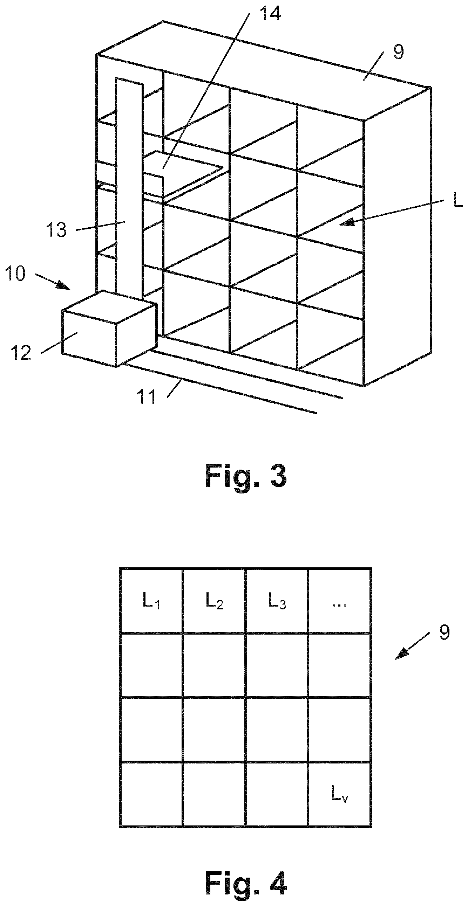

Fig. 3 zeigt dazu eine beispielhafte Anordnung mit einem Lager 9 mit mehreren Lagerplätzen L und einem Regalbediengerät 10, das einen auf Schienen 11 laufenden Wagen 12 mit einer auf einem Masten 13 vertikal verfahrbaren Hubplattform 14 aufweist. Die Funktion eines Regalbediengeräts 10, das hier als Auslagerungsroboter für das Lager 9 fungiert, ist an sich bekannt und braucht an dieser Stelle daher nicht im Detail erläutert werden.

Fig. 4 zeigt eine schematische Frontansicht des Lagers 9, aus welcher eine mögliche Nummerierung der Lagerplätze L1..Lv hervorgeht.

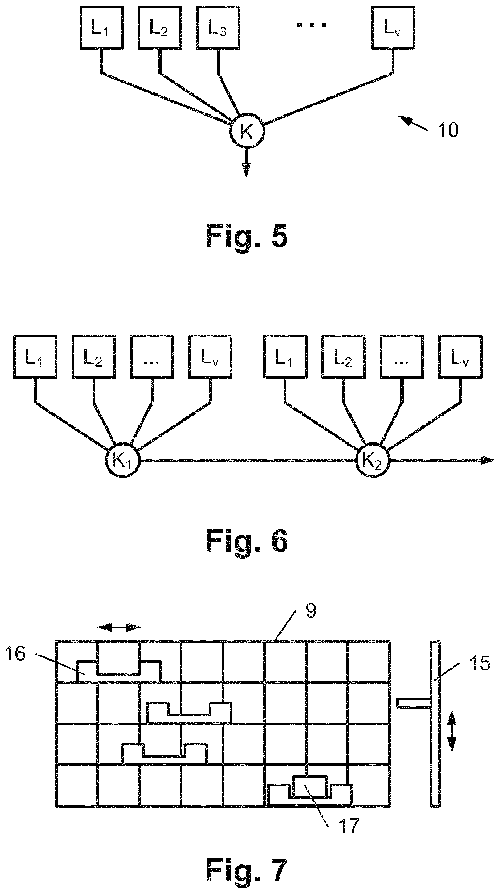

Fig. 5 zeigt nun eine logische beziehungsweise symbolhafte Repräsentation des in der Fig. 3 dargestellten Regalbediengeräts 10. Aus der Fig. 5 ist ersichtlich, dass eine der Anzahl v der Lagerplätzte L1..Lv entsprechende Anzahl an eingehenden Fördersegmenten 2 auf ein abgehendes Fördersegment 3 konzentriert wird. Die Konzentration des Förderstroms wird dabei durch die Hubplattform 14 gebildet, die in diesem Beispiel jeweils nur ein Förderobjekt 17 aufnehmen kann. Das Regalbediengerät 10 kann demzufolge als v-zu-1-Multiplexer betrachtet werden.

Denkbar ist auch, dass die Hubplattform 14 mehrere Förderobjekte 17 gleichzeitig aufnehmen kann. Eine logische Darstellung eines Regalbediengeräts 10 mit einer zwei Förderobjekte 17 aufnehmenden Hubplattform 14 ist in der Fig. 6 dargestellt. Jeder der Stellplätze bildet dabei einen logischen Knoten K1, K2. Im konkreten Beispiel wird angenommen, dass die Förderobjekte 17 nach rechts abtransportiert werden. Dies bedeutet, dass das am Knoten K1 befindliche Objekt erst abtransportiert werden kann, wenn das über den Knoten K2 transportierte Objekt die Hubplattform 14 verlassen hat. Aus diesem Grund wird der Ausgang des Knotens K1 als Eingang auf den Knoten K2 geführt. Selbstverständlich sind auch andere Anordnungen vorstellbar, bei denen die Förderobjekte 17 gleichzeitig die Hubplattform 14 verlassen können und die Knoten K1, K2 demgemäß nicht in der dargestellten Weise verknüpft sind. Allgemein kann ein Regalbediengerät als v-zu-w-Multiplexer betrachtet werden, wobei v die Anzahl der vom Regalbediengerät 10 erreichten Lagerplätze L1..Lv angibt und w die Anzahl der vom Regalbediengerät 10 gleichzeitig transportierten Objekte beziehungsweise die auf der Hubplattform 14 vorhandenen Stellplätze. Aus den Figuren 5 und 6 geht insbesondere auch hervor, dass die Fördersegmente generell auch als logische Fördersegmente gesehen werden können und nicht unbedingt rein physisch zu betrachten sind. Im Falle eines v-zu-1 Regalbediengeräts "existiert" zu einem Zeitpunkt ja stets nur ein eingehendes Fördersegment 1a, 1b.

Fig. 7 zeigt eine weitere beispielhafte Anordnung, umfassend ein Lager 9, einen neben dem Lager 9 angeordneten Lift 15 sowie mehrere auf den einzelnen Lagerebenen operierende, autonome Förderfahrzeuge 16 ("Shuttles"). Ein solches Shuttle 16, beziehungsweise ein solcher Auslagerungsroboter entnimmt ein Förderobjekt 17 von einem Lagerplatz L und transportiert es zum Lift 15. Dieser übernimmt das Förderobjekt 17 und transportiert es zu einer weiterführenden Förderbahn (nicht dargestellt).

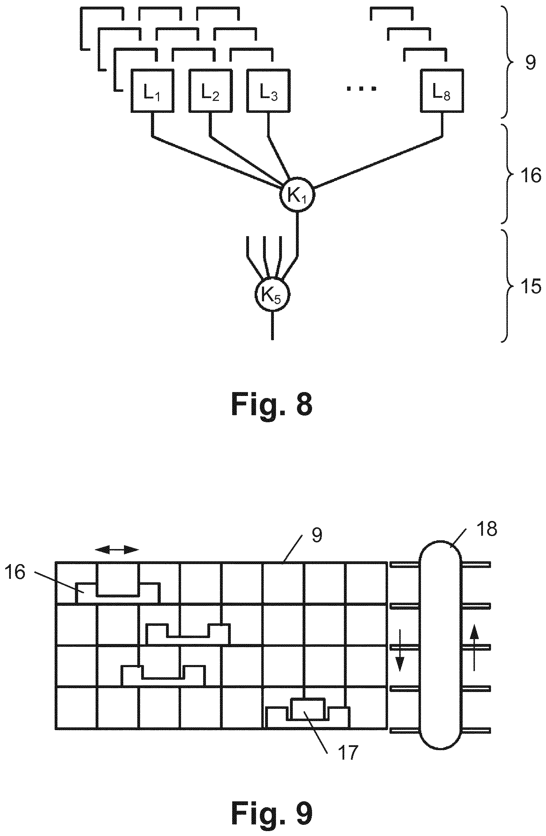

Die sich aus der Fig. 7 ergebende logische Struktur ist in der Fig. 8 dargestellt. Dabei bildet jedes Shuttle 16 einen Knoten K1..K4, auf welchen jeweils die Lagerplätze L1..L8 einer Lagerreihe geführt sind. Die von den Knoten K1..K4 abgehenden Fördersegmente 3 werden wiederum auf den Knoten K5 geführt, welcher den Lift 15 repräsentiert.

Fig. 9 zeigt eine weitere Anordnung mit einem Lager 9 und Shuttles 16, welche der in Fig. 7 gezeigten Anordnung sehr ähnlich ist. Im Unterschied dazu ist aber anstelle des Lifts 15 ein Paternoster 18 vorgesehen.

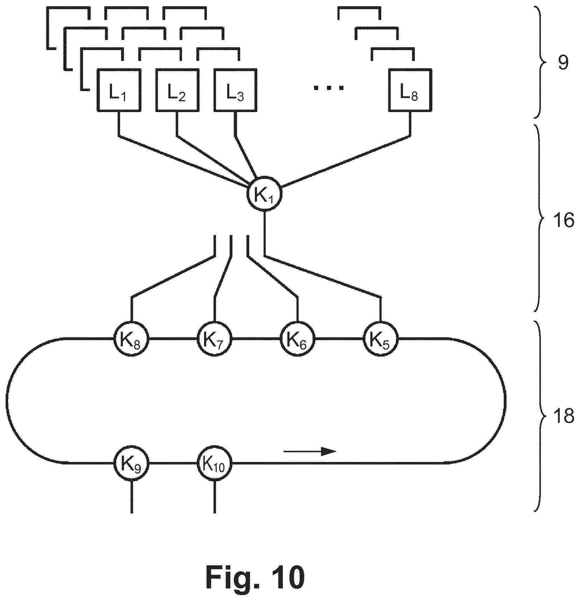

Fig. 10 zeigt wiederum eine logische Repräsentation der in Fig. 9 dargestellten Anordnung. Unter der Voraussetzung, dass der Paternoster 18 die Förderobjekte 17 im Kreis transportieren kann, wird dieser in der Fig. 10 als Schleife dargestellt, wobei die Knoten K5..K8 die Übergabepunkte in den einzelnen Ebenen des Lagers 9 und die Knoten K9 und K10 zwei Abzugsbahnen bilden, die (physisch) beispielsweise nebeneinander oder auch übereinander angeordnet sein können.

Die Steuerung 5 ist nun generell dazu eingerichtet, Förderobjekte 17 unterschiedlicher Soll-Sortierreihenfolgen, welche entsprechend ihrer jeweiligen Soll-Sortierreihenfolge aufsteigend/absteigend vektoriell verknüpft sind und welche den Fördertechnikelement/Knoten Ka, Kb, K1..K10 passieren, entsprechend ihrer Ist-Reihenfolge aufsteigend/absteigend vektoriell zu verknüpfen und
- an einem Fördertechnikelement/Knoten Ka, Kb, K1..K10 wartende Förderobjekte 17 in einer solchen Abfolge freizugeben, welche einen Ring mit einem gleichbleibenden Richtungssinn der vektoriellen Verknüpfung vermeidet.

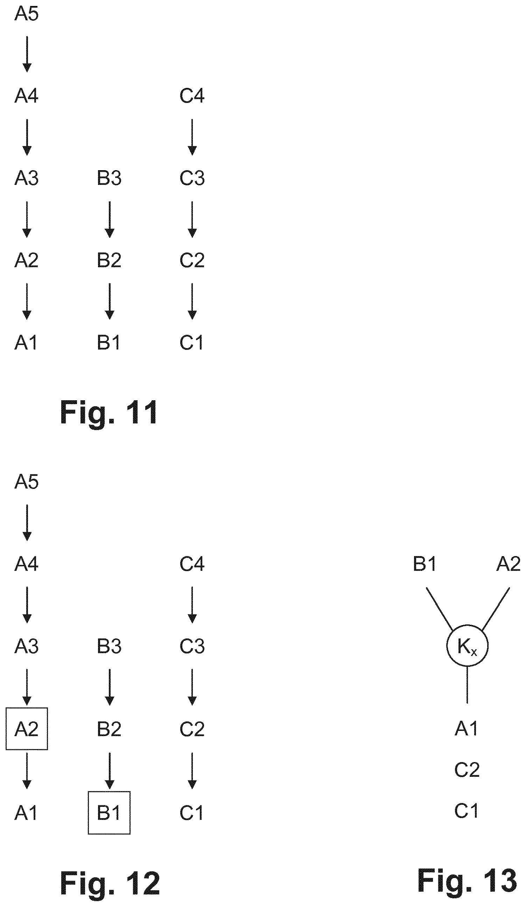

Das mit der Steuerung 5 verwirklichte Verfahren wird im Folgenden anhand eines exemplarischen Beispiels näher erläutert:
In einem ersten Schritt werden die Förderobjekte 17 entsprechend einer Soll-Sortierreihenfolge aufsteigend/absteigend vektoriell verknüpft. In dem Beispiel wird angenommen, dass drei Ziele mit Förderobjekten 17 versorgt werden und demgemäß drei Soll-Sortierreihenfolgen A1..A5, B1..B3 und C1..C4 gebildet werden. Das heißt an einem ersten Ziel sollen die Förderobjekte 17 in der Reihenfolge A1, A2, A3, A4, A5 ankommen, an einem zweiten Ziel in einer Reihenfolge B1, B2, B3 und an einem dritten Ziel in der Reihenfolge C1, C2, C3, C4. Die entsprechende Soll-Sortierreihenfolge respektive deren vektorielle Verknüpfung ist in der Fig. 11 dargestellt. Das Objekt A2 zeigt dabei auf das Objekt A1, das Objekt A3 auf das Objekt A2 und so weiter. Das heißt, ein Objekt zeigt in diesem Beispiel auf das diesem direkt vorausgehende Objekt. Generell kann die vektorielle Verknüpfung in einem Speicher der Steuerung 5 und/oder einer übergeordneten Steuerung gespeichert sein. Die vektorielle Verknüpfung kann in dem Speicher direkt mit Pointern/Zeigern ausgeführt sein.

Die Figuren 12 und 13 zeigen den Zustand an einem Knoten Kx nun zu einem bestimmten Zeitpunkt. Die Fig. 12 zeigt dabei die vektorielle Verknüpfung, die Fig. 13 die physische Anordnung einiger Förderobjekte 17 am Knoten Kx. Konkret wird in diesem Beispiel angenommen, dass die Objekte C1, C2 und A1 den Knoten Kx bereits passiert haben und die Objekte B1 und A2 am Knoten Kx angehalten wurden. In der vektoriellen Verknüpfung sind diese beiden Objekte B1 und A2 mit einem Rahmen markiert.

Entsprechend dem vorgeschlagenen Verfahren werden die Förderobjekte 17 unterschiedlicher Soll-Sortierreihenfolgen, welche das/den Fördertechnikelement/Knoten Ka..Kx, K1..K10 passieren, entsprechend ihrer Ist-Reihenfolge aufsteigend/absteigend vektoriell verknüpft.

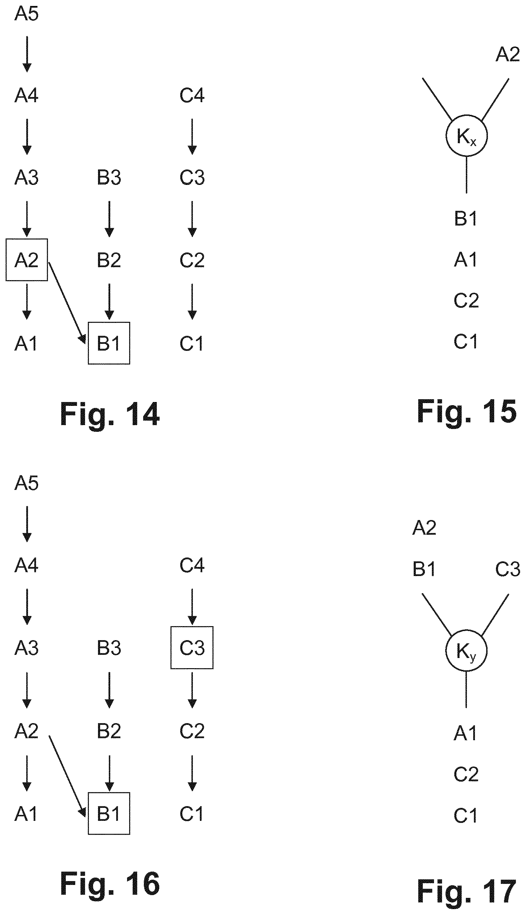

In dem Beispiel wird angenommen, dass das Objekt B1 freigegeben wird und dementsprechend eine vektorielle Verknüpfung hinzugefügt wird. Dieser Zustand ist in den Figuren 14 und 15 dargestellt. Das Objekt B1 hat den Knoten Kx zu diesem Zeitpunkt bereits passiert, und in der vektoriellen Verknüpfung ist eingetragen, dass das Objekt A2 dem Objekt B1 folgt, beziehungsweise dass das Objekt B1 dem Objekt A2 vorausgeht.

An dieser Stelle wird angemerkt, dass die vektoriellen Verknüpfungen der Förderobjekte 17 mit den Ordnungsnummern C1, C2, A1 der besseren Übersicht halber in den Figuren nicht eingezeichnet sind. In einem realen Ablauf wären aber auch deren Abhängigkeiten entsprechend ihrer Ist-Reihenfolge in der vektoriellen Verknüpfung aufzunehmen.

Die Figuren 16 und 17 zeigen nun einen Zustand an einem dem Knoten Kx nachgelagerten Knoten Ky zu einem späteren Zeitpunkt. Die vom Knoten Kx stammenden Objekte langen dabei am linken Zweig des Knotens Ky ein. Es wird nun angenommen, dass die Objekte C1, C2, A1 den Knoten Ky bereits passiert haben und die Objekte B1, A2 weiterhin am Knoten Ky warten. Zudem wartet am rechten Zweig das Objekt C3. Die Objekte B1, C3 sind daher in der vektoriellen Verknüpfung wiederum mit einem Rahmen markiert.

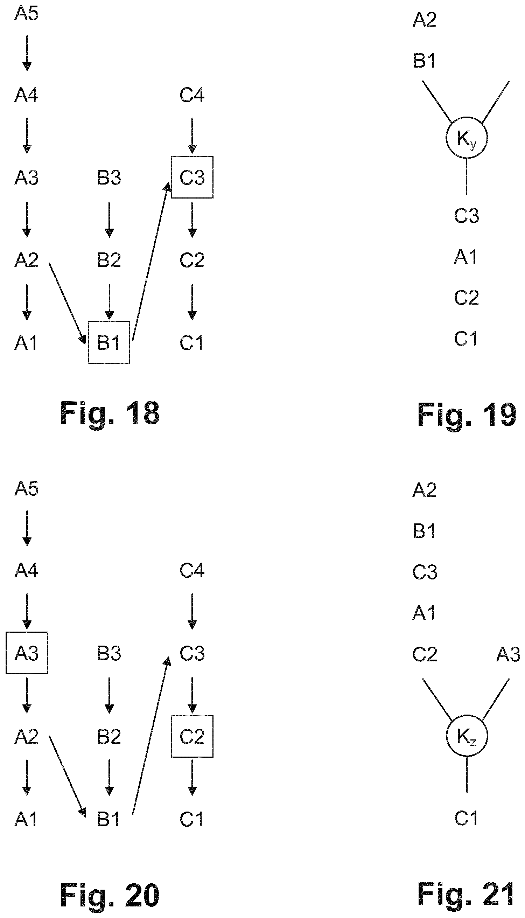

Es wird weiterhin angenommen, dass das Objekt C3 als nächstes den Knoten Ky passiert. Dieser Zustand ist in den Figuren 18 und 19 dargestellt. Konkret ist die Verknüpfung um einen Vektor ergänzt, demzufolge das Objekt B1 dem Objekt C3 folgt, beziehungsweise dass das Objekt C3 dem Objekt B1 vorausgeht.

Die Figuren 20 und 21 zeigen weiterhin einen Zustand an einem dem Knoten Ky nachgelagerten Knoten Kz zu einem späteren Zeitpunkt. Die vom Knoten Ky stammenden Objekte langen dabei wiederum am linken Zweig des Knotens Kz ein. Es wird angenommen, dass das Objekt C1 den Knoten Kz bereits passiert hat und die Objekte C2, A1, C3, B1, A2 weiterhin am Knoten Kz warten. Zudem wartet am rechten Zweig des Knotens Kz das Objekt A3. Die Objekte C2, A3 sind daher in der vektoriellen Verknüpfung mit einem Rahmen markiert.

Entsprechend dem vorgeschlagenen Verfahren werden an einem Fördertechnikelement/Knoten Ka..Kz, K1..K10 wartende Förderobjekte 17 in einer solchen Abfolge freigegeben, welche einen Ring mit einem gleichbleibenden Richtungssinn der vektoriellen Verknüpfung vermeidet.

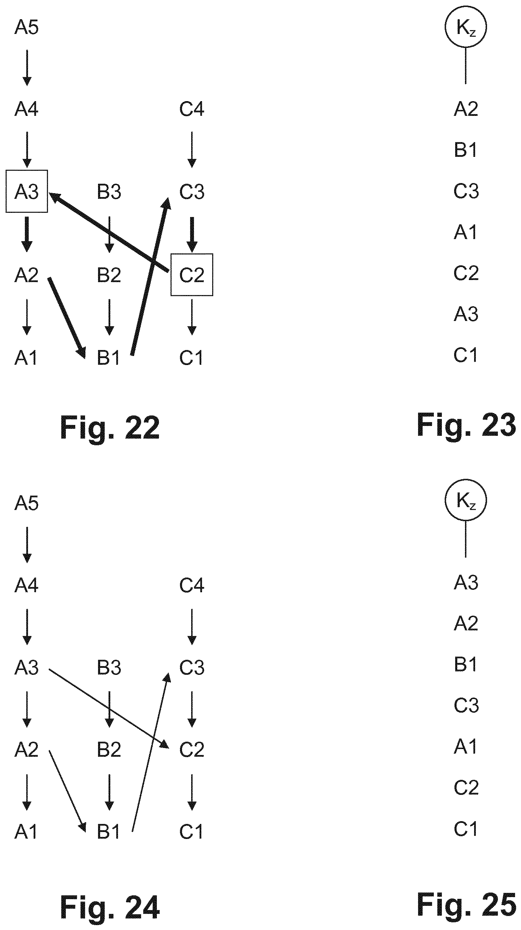

In den Figuren 22 und 23 ist ein Zustand dargestellt, in dem ein solcher Ring gebildet ist. Konkret entsteht dieser dadurch, dass das Objekt A3 den Knoten Kz vor dem Objekt C2 passiert. In der vektoriellen Verknüpfung ist demzufolge ein Vektor dargestellt, demnach das Objekt C2 dem Objekt A3 folgt, beziehungsweise dass das Objekt A3 dem Objekt C2 vorausgeht. In der Fig. 23 ist weiterhin ein Zustand dargestellt, in dem auch die Objekte A1, C3, B1, A2 den Knoten Kz passiert haben. Aus der Fig. 23 wird insbesondere deutlich, dass die Soll-Sortierreihenfolge A1..A5 ohne weitere Maßnahmen (siehe dazu später) nicht mehr hergestellt werden kann, da das Objekt A3 dem Objekt A1 vorausgeht.

Gemäß dem vorgeschlagenen Verfahren soll ein solcher Ring jedoch vermieden werden. Dies wird dadurch erreicht, dass die Anhalteeinrichtungen 4a, 4b so angesteuert werden, dass das Objekt C2 den Knoten Kz vor dem Objekt A3 passiert. In der in Fig. 24 dargestellten vektoriellen Verknüpfung ist demzufolge ein Vektor dargestellt, nach dem das Objekt A3 dem Objekt C2 folgt, beziehungsweise dass das Objekt C2 dem Objekt A3 vorausgeht. Zwar ergibt sich wieder ein Ring, jedoch keiner mit gleichbleibendem Richtungssinn. In der Fig. 25 ist weiterhin ein Zustand dargestellt. in dem auch die Objekte A1, C3, B1, A2 den Knoten Kz passiert haben. Aus der Fig. 23 wird insbesondere deutlich, dass die Soll-Sortierreihenfolge A1..A5 dann hergestellt werden kann, wenn das Objekt A2 dem Objekt A3 vorausgeht.

Im Endergebnis resultiert ein Verfahren zum Bündeln von Förderströmen an einem Fördertechnikelement/Knoten Ka..Kz, K1..K10 mit mehreren eingehenden Fördersegmenten 1a, 1b, zumindest einer Ankopplung 2 an ein abgehendes Fördersegment 3, auf das die eingehenden Fördersegmente 1a, 1b zusammengeführt werden, und mehreren Anhalteeinrichtungen 4a, 4b zum Anhalten von Förderobjekten 17 beziehungsweise eines Förderflusses auf den eingehenden Fördersegmenten 1a, 1b, wobei
- die Förderobjekte 17 entsprechend ihrer Soll-Sortierreihenfolge aufsteigend/absteigend vektoriell verknüpft werden,
- die Förderobjekte 17 unterschiedlicher Soll-Sortierreihenfolgen, welche das/den Fördertechnikelement/Knoten Ka..Kz, K1..K10 passieren, entsprechend ihrer Ist-Reihenfolge aufsteigend/absteigend vektoriell verknüpft werden und
- an einem Fördertechnikelement/Knoten Ka..Kz, K1..K10 wartende Förderobjekte 17 in einer solchen Abfolge freigegeben werden, welche einen Ring mit einem gleichbleibenden Richtungssinn der vektoriellen Verknüpfung vermeidet.

Im Speziellen werden an einem Knoten Ka..Kz, K1..K10 wartende Förderobjekte 17 nur in einer solchen Abfolge freigegeben, welche einen Ring mit einem gleichbleibenden Richtungssinn der vektoriellen Verknüpfung vermeidet.

In einer vorteilhaften Variante des vorgestellten Verfahrens
- werden für zumindest jene an dem Fördertechnikelement/Knoten Ka..Kz, K1..K10 wartenden Förderobjekte 17 Bewertungsparameter berechnet, welche einen Ring mit einem gleichbleibenden Richtungssinn in der vektoriellen Verknüpfung vermeiden,
- werden die Bewertungsparameter a) anhand einer Priorität einer Sortierreihenfolge berechnet, wobei höhere Prioritäten zu größeren/kleineren Bewertungsparametern führen, und/oder b) anhand eines räumlichen und/oder zeitlichen Abstands zwischen den wartenden Förderobjekten 17 und den jeweils in zumindest einer Sortierreihenfolge vorangehenden Förderobjekten 17, wobei dem Fördertechnikelement/Knoten Ka..Kz, K1..K10 stromabwärts gelegene Förderobjekte positiv/negativ und dem Fördertechnikelement/Knoten Ka..Kz, K1..K10 stromaufwärts gelegene Förderobjekte 17 negativ/positiv gewertet werden und
- wird jenes Förderobjekt 17 freigegeben wird, dem der größte/kleinste Bewertungsparameter zugeordnet ist.

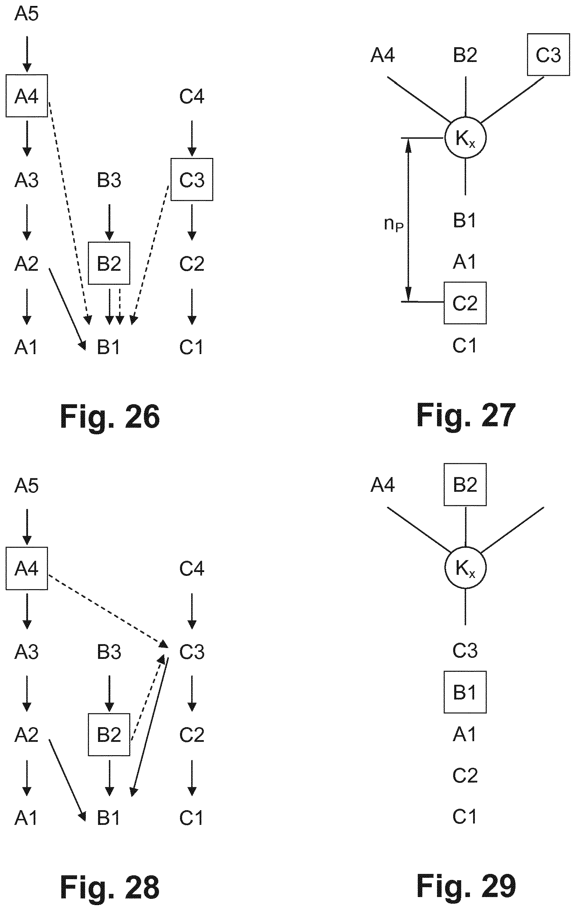

Die Figuren 26 und 27 zeigen dazu ein Beispiel, bei dem die Objekte C1, C2, A1, B1 den Knoten Kx passiert haben und die Objekte A4, B2 und C3 am Knoten Kx angehalten wurden. Die Objekte A4, B2 und C3 sind in der vektoriellen Verknüpfung mit einem Rahmen markiert. Keines der Objekte A4, B2 und C3 würde einen Ring mit einem gleichbleibenden Richtungssinn in der vektoriellen Verknüpfung erzeugen, so wie dies mit den strichliert gezeichneten Vektoren von A4→B1, B2→B1 und C3→B1 dargestellt ist. Für die Objekte A4, B2 und C3 werden nun in Folge Bewertungsparameter anhand des räumlichen Abstands zwischen den wartenden Förderobjekten 17 und den jeweils in zumindest einer Sortierreihenfolge vorangehenden Förderobjekten 17 berechnet (Fall b). Konkret wird die genannte räumliche Entfernung in diesem Beispiel anhand der Anzahl der Förderobjekte 17 bestimmt, welche zwischen einem wartenden Förderobjekt 17 und dem in einer Sortierreihenfolge vorangehenden Förderobjekt 17 liegen. In der Fig. 27 ist dazu die Anzahl np (es gilt in diesem Fall np=2) für die Objekte C3 und C2 eingetragen, welche zum größten Bewertungsparameter unter den Objekten A4, B2 und C3 führt. Der Abstand B2, B1 ist kürzer und der Abstand A4, A3 ist mit umgekehrtem Vorzeichen zu berücksichtigen, da das Objekt A3 den Knoten Kx noch nicht passiert hat. Demzufolge kann das Objekt C3 als erstes passieren.

Der daraus resultierende Zustand ist in den Figuren 28 und 29 dargestellt. Das nächste folgende Objekt ist das Objekt B2, da der Abstand B2, B1 nun zum größten Bewertungsparameter führt.

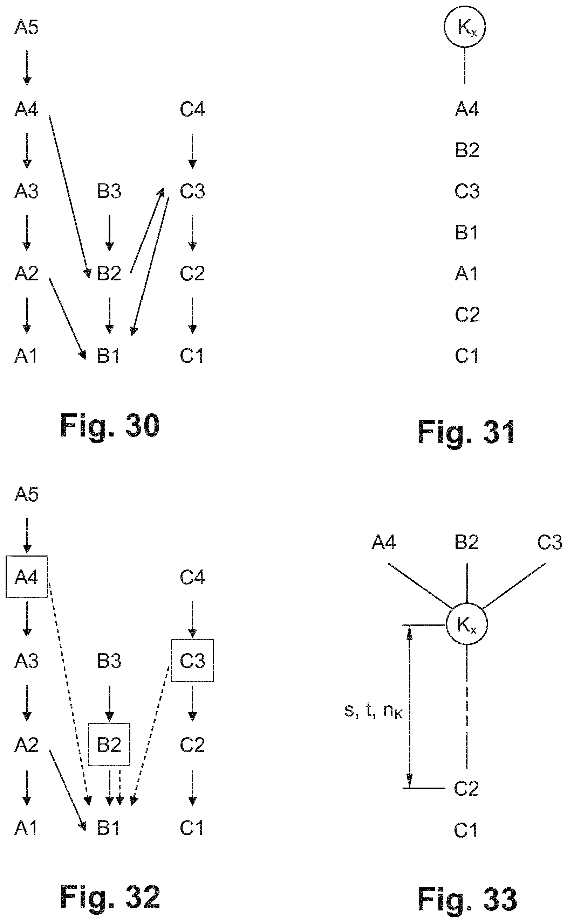

Als letztes folgt das Objekt A4, da es insgesamt am wenigsten priorisiert ist. Der resultierende Zustand ist schließlich in den Figuren 30 und 31 dargestellt.

In dem obigen Beispiel wurde der Bewertungsparameter anhand des räumlichen Abstands, konkret anhand der Anzahl np der Förderobjekte 17, zwischen den wartenden Förderobjekten 17 und den jeweils in zumindest einer Sortierreihenfolge vorangehenden Förderobjekten 17 berechnet. Dies ist zwar vorteilhaft aber nicht die einzig vorstellbare Möglichkeit. Denkbar ist vielmehr auch, dass die räumliche Entfernung anhand der Anzahl nk der Fördertechnikelemente/Knoten Ka..Kz, K1..K10 bestimmt wird, welche zwischen einem wartenden Förderobjekt 17 und dem in einer Sortierreihenfolge vorangehenden Förderobjekt 17 liegen. In einer ähnlichen Variante wird die genannte räumliche Entfernung anhand der Anzahl der Vektoren in der vektoriellen Verknüpfung bestimmt, welche zwischen einem wartenden Förderobjekt 17 und dem in einer Sortierreihenfolge vorangehenden Förderobjekt 17 liegen. Denkbar ist weiterhin auch, dass die genannte räumliche Entfernung anhand einer (physischen) Länge eines Förderstroms bestimmt wird, dessen Enden zwischen einem wartenden Förderobjekt 17 und dem in einer Sortierreihenfolge vorangehenden Förderobjekt 17 liegen. Die Länge des genannten Förderstroms kann dann in einer Längeneinheit, beispielsweise in Meter, angegeben werden.

Alternativ oder zusätzlich ist auch vorstellbar, dass die Bewertungsparameter anhand eines zeitlichen Abstands zwischen den wartenden Förderobjekten 17 und den jeweils in zumindest einer Sortierreihenfolge vorangehenden Förderobjekten 17 berechnet wird. Beispielsweise kann die genannte zeitliche Entfernung anhand einer Dauer zum Durchlaufen eines Förderstroms bestimmt werden, dessen Enden zwischen einem wartenden Förderobjekt 17 und dem in einer Sortierreihenfolge vorangehenden Förderobjekt 17 liegen. Der genannte zeitliche Abstand kann dann in einer Zeiteinheit, beispielsweise in Sekunden, angegeben werden.

In der Fig. 33 ist der räumliche/zeitliche Abstand zwischen den Objekten C2 und C3 symbolisch durch den Entfernungspfeil s (Länge eines Förderstroms), t (Dauer zum Durchlaufen eines Förderstroms) und nk (Anzahl der Knoten) dargestellt.

Wird beispielsweise in der Fig. 10 angenommen, dass die Objekte A4, B2 und C3 am Knoten K1 angehalten wurden und die Objekte C1, C2, A1, B1 am Knoten K9 warten, dann kann für die Berechnung des Bewertungsparameters die räumliche Entfernung s zwischen dem Knoten K1 und dem Knoten K9 herangezogen werden, die Dauer t, welche die Förderobjekte 17 zum Durchlaufen dieser Strecke s benötigen, oder beispielsweise auch die Anzahl nk der zwischen dem Knoten K1 und dem Knoten K9 liegenden Knoten. Die Anzahl nk beträgt im vorliegenden Beispiel nk=4.

Zusätzlich oder alternativ zu den bereits vorgeschlagenen Möglichkeiten können die Bewertungsparameter a) anhand einer Priorität einer Sortierreihenfolge berechnet werden. Beispielsweise kann die Abarbeitung der Sortierreihenfolge C1..C4 wichtiger sein als die Abarbeitung der Sortierreihenfolge A1..A5 und demzufolge höher priorisiert werden.

Ein Gesamtbewertungsparameter kann beispielsweise als Summe oder Produkt der gemäß Fall a) und Fall b) bestimmten Bewertungsparameter definiert sein.

In einer weiteren vorteilhaften Variante des vorgestellten Verfahrens
- wird ein an einem Knoten Ka..Kz, K1..K10 wartendes Förderobjekt 17 freigegeben, welches einen Ring mit einem gleichbleibenden Richtungssinn der vektoriellen Verknüpfung erzeugt, wenn a) der zugeordnete Bewertungsparameter einen Schwellwert überschreitet/unterschreitet und wenn b) ein Platz in einem/einer dem Knoten Ka..Kz, K1..K10 stromabwärts nachgelagerten Puffer, Sequenzer, Ausweichstrecke oder Rückkopplung oder Auffächerung frei ist oder frei wird, wenn das besagte Förderobjekt 17 planmäßig an dem Puffer, dem Sequenzer, der Ausweichstrecke oder der Rückkopplung eintrifft, und
- es wird das Förderobjekt 17 dort hinein transportiert.

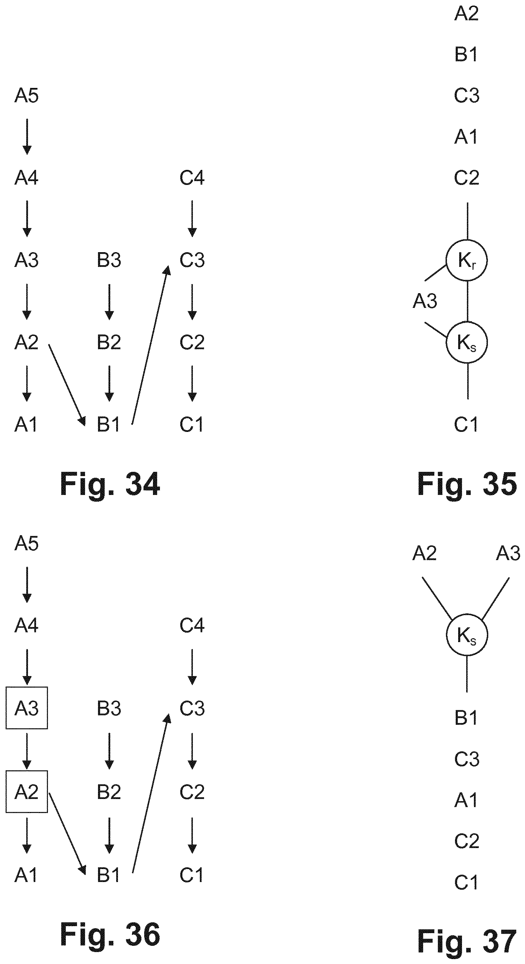

Das heißt, dass ein Fehler in der Ist-Reihenfolge dann ausnahmsweise zugelassen werden kann, wenn der Bewertungsparameter für das betreffende Objekt sehr hoch ist und dessen Weitertransport daher wichtig ist. Zwecks Illustration des vorgestellten Verfahrens wird in den Figuren 34 und 35 die Berichtigung der in den Figuren 22 und 23 dargestellten Reihenfolge dargestellt. Dazu wird das den Ring in der vektoriellen Verknüpfung erzeugende Objekt (siehe Fig. 22) aus dem Förderstrom ausgeschleust und zu einem späteren Zeitpunkt wieder eingeschleust. In der Fig. 35 wird das Objekt A3 an einem Knoten Kr daher in einen linken Zweig geleitet und an einem Knoten Ks angehalten, während die Objekte C2, A1, C3, B1 direkt durch die Knoten Kr und Ks durchgeschleust werden. Zu einem nachfolgenden Zeitpunkt warten somit die Objekte A2 und A3 am Knoten Ks (siehe Fig. 36 und 37). Während die Abfolge A3 vor A2 wiederum einen Ring mit gleichbleibendem Richtungssinn in der vektoriellen Verknüpfung erzeugen würde, wird ein solcher Ring mit der Abfolge A2 vor A3 vermieden.

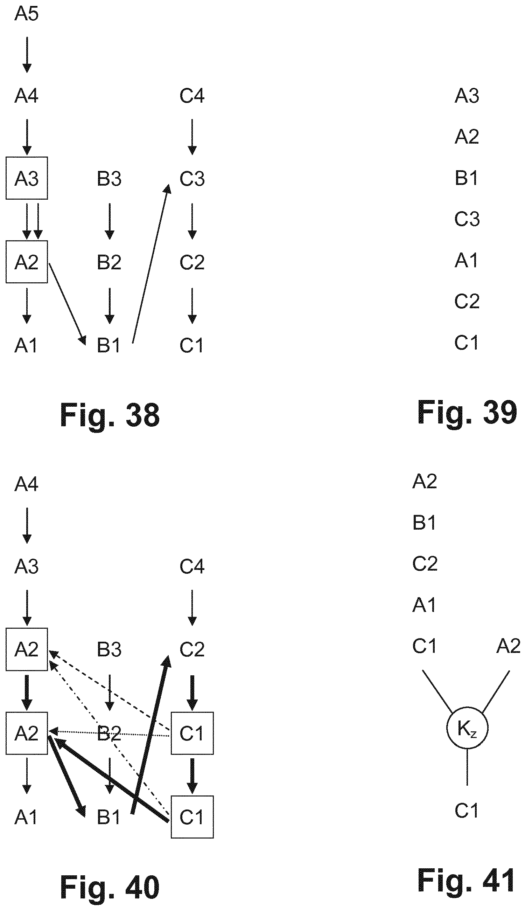

Der Vektor C2→A3 wurde bereits zuvor aus der vektoriellen Verknüpfung gelöscht, als das Förderobjekt 17 mit der Ordnungsnummer A3 in die Ausweichstrecke (alternativ in einen Puffer, einen Sequenzer oder eine Rückkopplung) hinein transportiert wurde. Alternativ kann auch ein Eintragen des Vektors C2→A3 in Fig. 22 unterbleiben, wenn das Objekt A3 als unsortiertes Objekt markiert wird und in Folge am Knoten Kr in die Ausweichstrecke geleitet wird. Insgesamt entsteht in Fig. 38 eine vektorielle Verknüpfung ohne Ring mit gleichbleibendem Richtungssinn. Auch die Fig. 39 zeigt eine korrekte Abfolge der Objekte A1, A2, A3 entsprechend der vorgegebenen Soll-Reihenfolge.

Die Figuren 40 und 41 zeigen nun eine Situation, in der mehrere Förderobjekte 17 die gleiche Ordnungsnummer in der Sortierreihenfolge aufweisen. Konkret sind zwei Objekte A2 und zwei Objekte C1 vorhanden. Diese Vorgehensweise ist etwa dann sinnvoll, wenn mehrere gleichartige Objekte an einer bestimmten Position am Ziel ankommen sollen. Beispielsweise kann es sich bei den Objekten A2 um mehrere gleichartige Wasserflaschen handeln, bei denen es egal ist, welche Wasserflasche an welcher von mehreren für Wasserflaschen möglichen Positionen angeordnet wird.

Die Figuren 40 und 41 zeigen eine Situation, welche der in den Figuren 20 bis 21 dargestellten Situation vergleichbar ist. Die Figuren 40 und 41 zeigen dabei einen Zustand, in dem die vom Knoten Ky stammenden Objekte am linken Zweig des Knotens Kz eingelangt sind. Es wird nun angenommen, dass das Objekt C1 den Knoten Kz bereits passiert hat und ein weiteres Objekt C1 sowie die Objekte A1, C2, B1, A2 weiterhin am Knoten Kz warten. Zudem wartet am rechten Zweig des Knotens Kz ein weiteres Objekt A2. Die Objekte C1, A2 sind daher in der vektoriellen Verknüpfung mit einem Rahmen markiert.

Es bestehen nun mehrere Möglichkeiten den Vektor C1→A2 in die vektorielle Verknüpfung einzutragen. Alle Möglichkeiten führen - sofern das Objekt A2 vor dem Objekt C1 freigegeben wird - zu einem geschlossenen Ring mit gleichbleibendem Richtungssinn. In der Fig. 40 ist dabei einer der Ringe mit dicken Linien dargestellt. Aber auch die anderen möglichen Vektoren, welche punktiert, strichliert und strichpunktiert eingezeichnet sind, führen - wie leicht nachvollzogen werden kann - zu dem besagten Ring. Dementsprechend muss das Objekt C1 vor dem Objekt A2 freigegeben werden, um die Soll-Sortierfolgen realisieren zu können. Es sei denn, es wird ein Platz in einem/einer dem Knoten Kz stromabwärts nachgelagerten Puffer, Sequenzer, Ausweichstrecke oder Rückkopplung genutzt (vergleiche Fig. 34 und 35)

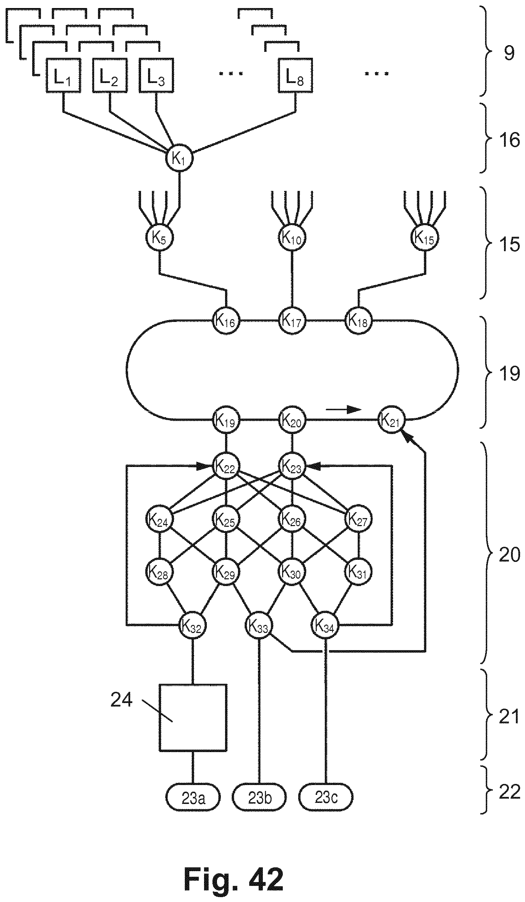

Fig. 42 zeigt nun ergänzend ein etwas komplexeres Beispiel für eine Förderanlage. Wie auch schon in den Figuren 5, 6, 8 und 10 sind mehrere Fördertechnikelemente Ka, Kb derart miteinander gekoppelt, dass zumindest eine Ankopplung 2 für ein abgehendes Fördersegment 3 des einen Fördertechnikelements Ka, Kb mit einem eingehenden Fördersegment 1a, 1b eines anderen Fördertechnikelements Ka, Kb direkt oder indirekt verbunden ist. Wie auch schon in den Figuren 5, 6, 8 und 10 sind die Fördertechnikelemente respektive Knoten K1..K34 lediglich vereinfacht dargestellt.

"Direkt" bedeutet in obigem Zusammenhang, dass die Ankopplung 2 für ein abgehendes Fördersegment 3 des einen Fördertechnikelements Ka, Kb ohne Zwischenschaltung anderer Elemente mit einem eingehenden Fördersegment 1a, 1b eines anderen Fördertechnikelements Ka, Kb verbunden ist. Beispielsweise betrifft dies in der Fig. 42 die Knoten K5 und K16. "Indirekt" bedeutet, dass andere Elemente zwischengeschaltet sind, insbesondere Abzweiger und dergleichen. Beispielsweise ist die Verbindung der Knoten K16 und K24 indirekt, da K19 und K22 zwischengeschaltet sind und als Auffächerung fungieren.

Konkret umfasst die in der Fig. 42 dargestellte Anordnung ein Lager 9, mehrere darin autonom operierende Shuttles 16 sowie an die Lager 9 angeschlossene Lifte 15. In diesem Beispiel weist das Lager 9 drei Regalreihen beziehungsweise Regalgassen auf, wobei jede Regalreihe 32 Lagerplätzte L aufweist, die in vier Ebenen zu je acht Plätzen angeordnet sind. Demgemäß bewegen sich in der ersten Regalreihe die durch die Knoten K1..K4 repräsentierten Shuttles 16, in der zweiten Regalreihe die durch die Knoten K6..K9 repräsentierten Shuttles 16 und in der dritten Regalreihe die durch die Knoten K11..K14 repräsentierten Shuttles 16. Die Lifte 15 sind durch die Knoten K5, K10 und K15 repräsentiert.

An die Lifte 15 schließt sich eine horizontale Schleife 19 an, in der die Knoten K16..K21 angeordnet sind. Der Pfeil bezeichnet dabei die Förderrichtung. Über die Knoten K19 und K20 werden Förderobjekte 17 aus der Schleife 19 in ein Netz 20 übergeben, das mehrere miteinander vernetzte Knoten K22..K34 aufweist. An das Netz 20 schließt sich ein optionaler Sortierbereich 21 und an diesen ein Kommissionierbereich 22 an. Im Kommissionierbereich 22 befinden sich drei zu versorgende Ziele 23a..23c, beispielsweise Arbeitsplätze, an denen Förderobjekte 17 automatisch oder manuell in Versandbehälter oder auf Paletten geladen werden. In dem in Fig. 42 dargestellten Beispiel ist nur einem Ziel 23a eine Sortierstufe 24 vorgeschaltet. Denkbar wäre aber auch, dass allen Zielen 23a..23c je eine Sortierstufe 24 vorgeschaltet ist oder auch keinem.

In dem in Fig. 42 gezeigten Beispiel sind mehrere Fördertechnikelemente/Knoten K1..K34 direkt oder indirekt ringförmig miteinander verbunden. Dementsprechend wird wenigstens ein Teilförderstrom ringförmig über die genannten Fördertechnikelemente/Knoten K1..K34 geführt. Mit anderen Worten wird eine Rückkopplung vorgesehen. Beispielsweise ist der Knoten K21 mit dem Knoten K18, der Knoten K32 mit dem Knoten K22, der Knoten K34 mit dem Knoten K23 sowie der Knoten K33 mit dem Knoten K21 ringförmig verbunden. Auf diese Weise kann der Ordnungsgrad der transportierten Förderobjekte 17 in mehreren Durchläufen erhöht werden, beziehungsweise können Lücken in der Reihenfolge schrittweise aufgefüllt werden. Die Begriffe "stromabwärts" und "stromaufwärts" können in Bezug auf einen solchen ringförmigen Teilstrom synonymisch gebraucht werden. Selbstverständlich sind die in der Fig. 42 dargestellten Rückkopplungen rein beispielhaft und dienen der besseren Illustration der Möglichkeiten. Andere ringförmige Verbindungen sind natürlich gleichermaßen vorstellbar.

In der Fig. 42 sind weiterhin einige Auffächerungen des Förderstroms dargestellt, beispielsweise bei den Knoten K22..K31. Generell kann eine Auffächerung dazu dienen, einen abgehenden Förderstrom in verschiedene Bereiche einer Förderanlage beziehungsweise zu verschiedenen Zielen 23a..23c zu leiten. Dabei kann ein Knoten K22..K31 mit mehreren abgehenden Fördersegmenten 3 gedanklich auch in einen Knoten K22..K31 mit nur einem abgehenden Fördersegment 3 und nachgelagerten Knoten mit mehreren abgehenden Fördersegmenten 3 aufgeteilt werden.

Günstig ist es, wenn zumindest jene Verfahrensschritte, welche einer Entscheidung über eine Freigabe eines Förderobjekts 17 zugeordnet sind, bis auf die Berücksichtigung der vektoriellen Verknüpfung unabhängig von allen anderen Fördertechnikelementen/Knoten Ka..Kz, K1..K34 und/oder unabhängig von einer zentralen Steuerung ausgeführt werden.

Dadurch kann die Kommunikation und damit der Aufwand für Kommunikationsleitungen zwischen den Fördertechnikelementen K1..K34 gering gehalten werden.

In diesem Zusammenhang ist es auch von Vorteil, wenn eine Programmlogik im Hinblick auf die Freigabe eines Förderobjekts 17 in allen Fördertechnikelementen K1..K34 identisch aufgebaut ist, beziehungsweise wenn die Verfahrensschritte im Hinblick auf die Freigabe eines Förderobjekts 17 in allen Fördertechnikelementen K1..K34 in identischer Weise ausgeführt werden. Auf diese Weise kann der Aufwand für die Herstellung beziehungsweise Programmierung der Steuerung für eine Förderanlage insgesamt gering gehalten werden, da diese aus mehreren identischen Modulen aufgebaut ist. Auch der Aufwand für eine eventuelle Fehlersuche kann dadurch klein gehalten werden.

Zur Bildung einer vorgegebenen Sortierreihenfolge ist es auch von Vorteil, wenn Förderobjekte 17 im Hinblick auf die Ziele 23a..23c und in Bezug auf eine Sortierreihenfolge für ein zu versorgendes Ziel 23a..23c geordnet ausgelagert werden. Das bedeutet, dass zuerst Förderobjekte 17 für das Ziel 23a..23c mit der niedrigsten Position in einer Reihenfolge ausgelagert werden, dann die Förderobjekte 17 mit der zweitniedrigsten Position usw. Zudem werden die Förderobjekte 17 für ein bestimmtes Ziel 23a..23c ebenfalls geordnet ausgelagert. Befinden sich in der Regalreihe des Lagers 9, aus dem mit den Fördertechnikelementen K1..K4 ausgelagert wird, zum Beispiel die Förderobjekte 17 mit der Nummer 3 und der Nummer 5 des Ziels 23a und die Förderobjekte 17 mit der Nummer 1 und der Nummer 7 des Ziels 23b, so werden die Förderobjekte 17 in der Reihenfolge A3, A5, B1, B7 ausgelagert. Bei diesem Beispiel wird angenommen, dass sich die in der Reihenfolge fehlenden Förderobjekte 17 (also z.B. A1, A2, A4, B2, B3, usw.) in anderen Regalreihen befinden, die von anderen Fördertechnikelementen K6..K9, K11..K14 ausgelagert werden. Auf diese Weise kann insgesamt ein hoher Ordnungsgrad der auf der Fördertechnik vorhandenen Förderströme erzielt werden.

Alternativ wäre auch vorstellbar, dass die Förderobjekte 17 in Bezug auf eine Sortierreihenfolge für ein zu versorgendes Ziel 23a..23c geordnet, im Hinblick auf die Ziele 23a..23c jedoch chaotisch beziehungsweise ungeordnet aus dem Lager 9 ausgelagert werden. Bezogen auf das zuvor genannten Beispiel bedeutet dies, dass die Förderobjekte 17 beispielsweise auch in der Reihenfolge B1, A3, A5, B7 oder beispielsweise auch in der Reihenfolge B1, A3, B7, A5 ausgelagert werden können. Durch die ungeordnete Auslagerung auf Zielebene kann der Durchsatz bei der Auslagerung erhöht werden, beispielsweise wenn bei der Auslagerung Transportwege der Fördertechnikelemente K1..K15 minimiert werden.

Gegebenenfalls können die Förderobjekte 17 vor Erreichen eines Ziels 23a..23c noch eine Sortierstufe beziehungsweise einen Sequenzer 24 durchlaufen, um eine exakte Ist-Reihenfolge zu erreichen, so wie dies in der Fig. 42 für das Ziel 23a vorgesehen ist. Durch die Vorsortierung kann diese Sortierstufe 24 jedoch klein gehalten werden und benötigt daher nur wenig Bauraum.

Um Blockaden auf der Förderanlage zu erkennen beziehungsweise um diese zu beheben, kann in einer vorteilhaften Ausführungsform auch vorgesehen sein, dass die Freigaben der Knoten K1..K34 pro Zeiteinheit von einer übergeordneten Steuerung überwacht werden und jene Anhalteeinrichtung 4a, 4b freigegeben wird, an welcher das Förderobjekt 17 mit der niedrigsten Ordnungsnummer wartet, wenn für die Freigaben pro Zeiteinheit ein Schwellwert unterschritten wird.

Sinkt beispielsweise der Wert für die Freigaben pro Zeiteinheit von einem relativ konstanten Wert (z.B. 50 Freigaben pro Minute) auf einen sehr niedrigen Wert oder sogar Null, so kann davon ausgegangen werden, dass auf der Förderanlage eine Blockade vorliegt. Durch ein übergeordnetes Eingreifen kann diese Blockade wieder aufgelöst werden. Anstelle das Förderobjekt 17 mit der niedrigsten Ordnungsnummer freizugeben, kann eine Freigabe beispielsweise auch zufällig erfolgen.

Vorteilhaft ist es auch, wenn der Schwellwert entsprechend der Anzahl der auf der Förderanlage befindlichen Förderobjekte 17 adaptiert wird. Das heißt, dass der Schwellwert erhöht wird, wenn die Anzahl der transportierten Objekte 17 steigt und umgekehrt. Damit wird vermieden, dass eine sinkende Anzahl von Freigaben, welche durch eine geringe Anzahl an transportierten Förderobjekten 17 begründet ist, als Blockade fehlinterpretiert wird.

Beispielsweise kann so ein Zustand beim Starten eines Kommissionierauftrags eintreten oder beispielsweise auch wenn dieser nahezu abgearbeitet ist. In beiden Fällen befinden sich vergleichsweise wenige Objekte 17 auf der Förderanlage weil sie eben zur Mehrzahl noch im Lager 9 oder bereits in Versandbehälter verladen sind. Vorteilhaft ist es auch, wenn ein Pausieren der Entnahme der Förderobjekte 17 an einem Ziel 23a..23c berücksichtigt wird. Insbesondere beim manuellen Kommissionieren kommt es zu zwangsläufigen Unterbrechungen des Arbeitsablaufs, beispielsweise wenn ein Arbeiter seine Pause antritt oder die Toilette aufsucht. In diesem Fall kann es ebenfalls zu einem Rückgang der Freigaben pro Zeiteinheit kommen, der nicht durch eine Blockade begründet ist.

In diesem Zusammenhang ist es auch zweckmäßig, wenn die Auslagerung von Förderobjekten 17 aus dem Lager 9 entsprechend der Entnahme der Förderobjekte 17 am Ziel 23a..23c angepasst wird. Das heißt, dass die Anzahl der pro Zeiteinheit aus dem Lager 9 entnommenen Förderobjekte 17 gesenkt wird, wenn die Anzahl der pro Zeiteinheit am Ziel 23a..23c entnommenen Förderobjekte 17 sinkt und umgekehrt.

In einer Variante des angegebenen Verfahrens werden die Freigaben pro Zeiteinheit je zu versorgendem Ziel 23a..23c von einer übergeordneten Steuerung überwacht. Dementsprechend wird jene Anhalteeinrichtung 4a, 4b freigegeben, an welcher das Förderobjekt 17 mit der niedrigsten Ordnungsnummer A1..A5, B1..B3, C1..C4 des betreffenden Ziels 23a..23c wartet, wenn für die dem betreffenden Ziel 23a..23c zugeordneten Freigaben pro Zeiteinheit ein Schwellwert unterschritten wird.

Im Zusammenhang mit Fig. 42 ist auch wiederum gut erkennbar, wie der weiter oben erläuterte Bewertungsparameter anhand eines räumlichen und/oder zeitlichen Abstands zwischen den wartenden Förderobjekten 17 und den jeweils in zumindest einer Sortierreihenfolge vorangehenden Förderobjekten 17 berechnet werden kann (Fall b). Rein beispielhaft wird angenommen, dass sich der Vorgänger des am Knoten K5 wartenden Förderobjekts 17 am Knoten K22 befindet. Demzufolge befinden sich drei Knoten zwischen den beiden genannten Förderobjekten 17, nämlich die Knoten K5, K16 und K19. Dies kann unmittelbar als Berechnungsbasis für den Bewertungsparameter herangezogen werden. Alternativ kann auch die zwischen dem Knoten K5 und dem Knoten K22 liegende Strecke s als Berechnungsbasis herangezogen werden, oder auch die dafür aufzuwendende Zeit t. Als weitere Alternative kann der Bewertungsparameter auch wie bereits erwähnt anhand der Anzahl der zwischen dem Knoten K5 und dem Knoten K22 angeordneten Förderobjekte 17 herangezogen werden.

Die obige Berechnung des Bewertungsparameters eignet sich vor allem dann, wenn die beiden in Betracht gezogenen Förderobjekte 17 auf demselben Weg transportiert werden und/oder wenigstens auf ihrem Weg den betreffenden Knoten Ka.. K34 passieren. Ist dies nicht der Fall, so kann eine andere Berechnungsmethode vorteilhafter sein.

Konkret werden die Bewertungsparameter dann anhand von Differenzen räumlicher und/oder zeitlicher Abstände nk, np, s, t berechnet, wobei eine Differenz als räumlicher und/oder zeitlicher Abstand nk, np, s, t eines wartenden Förderobjekts 17 zu einem Ziel 23a..23c oder stromabwärts gelegenen Fördertechnikelement/Knoten Ka..K34 weniger einem räumlichen und/oder zeitlichen Abstand nk, np, s, t des in einer Sortierreihenfolge vorangehenden Förderobjekts 17 zu diesem Ziel 23a..23c oder zu diesem stromabwärts gelegenen Fördertechnikelement/Knoten Ka..K34 definiert ist.

Demzufolge resultiert ein Verfahren, bei dem
- für zumindest jene an dem Fördertechnikelement/Knoten Ka..K34 wartenden Förderobjekte 17 Bewertungsparameter berechnet werden, welche einen Ring mit einem gleichbleibenden Richtungssinn in der vektoriellen Verknüpfung vermeiden,
- die Bewertungsparameter a) anhand einer Priorität einer Sortierreihenfolge berechnet werden, wobei höhere Prioritäten zu größeren/kleineren Bewertungsparametern führen, und/oder b) anhand von Differenzen räumlicher und/oder zeitlicher Abstände nk, np, s, t berechnet werden, wobei eine Differenz als räumlicher und/oder zeitlicher Abstand nk, np, s, t eines wartenden Förderobjekts 17 zu einem Ziel 23a..23c oder stromabwärts gelegenen Fördertechnikelement/Knoten Ka..K34 weniger einem räumlichen und/oder zeitlichen Abstand nk, np, s, t des in einer Sortierreihenfolge vorangehenden Förderobjekts 17 zu diesem Ziel 23a..23c oder zu diesem stromabwärts gelegenen Fördertechnikelement/Knoten Ka..K34 definiert ist und
- jenes Förderobjekt 17 freigegeben wird, dem der größte/kleinste Bewertungsparameter zugeordnet ist.

Bei einem konkreten Beispiel wird angenommen, dass sich der Vorgänger des am Knoten K5 wartenden Förderobjekts 17 am Knoten K10 befindet. Beide Förderobjekte 17 sind in diesem Beispiel dem Ziel 23a zugeordnet.

Die genannte Differenz kann nun anhand einer Länge s eines Förderstroms bestimmt werden, dessen Enden zwischen dem wartenden Förderobjekt 17 und dem besagten Ziel 23a liegen, und jener Länge s eines Förderstroms, dessen Enden zwischen dem in einer Sortierreihenfolge vorangehenden Förderobjekt 17 und dem besagten Ziel 23a liegen. In dem konkreten Beispiel errechnet sich die genannte Differenz also zu Distanz Förderobjekt 17 zu Ziel 23a minus Distanz Vorgänger Förderobjekt 17 zu Ziel 23a.

Anstelle des Ziels 23a kann auch ein stromabwärts gelegener Knoten Ka..K34 als Bezugsbasis herangezogen werden. Der nächste von beiden Förderobjekten 17 passierte Knoten ist der Knoten K16. In dem konkreten Beispiel kann die genannte Differenz also zu Distanz Förderobjekt 17 zu Knoten Kl6 minus Distanz Vorgänger Förderobjekt 17 zu Knoten K16 errechnet werden. Anstelle des Knotens K16 kann auch ein anderer, von beiden Förderobjekten 17 passierter, Knoten Ka..K34 herangezogen werden, beispielsweise der Knoten K19 oder der Knoten K22. Das errechnete Ergebnis für die besagte Differenz wird dadurch nicht beeinflusst.

Die Berechnung der genannten Differenz kann auch auf Basis eines zeitlichen Abstands anstatt auf Basis eines räumlichen Abstands erfolgen. Demgemäß errechnet sich die genannte Differenz in dem konkreten Beispiel also mit der Formel: Zeit Förderobjekt 17 zu Ziel 23a minus Zeit Vorgänger Förderobjekt 17 zu Ziel 23a oder aber auch mit der Formel: Zeit Förderobjekt 17 zu Knoten K16 minus Zeit Vorgänger Förderobjekt 17 zu Knoten K16.

Sinngemäß kann die genannte Differenz auch anhand der Anzahl np der Förderobjekte 17 bestimmt werden, welche zwischen dem wartenden Förderobjekt 17 und dem besagten Ziel 23a beziehungsweise dem besagten stromabwärts gelegenen Fördertechnikelement/Knoten Ka.. K34 liegen, und jener Anzahl np der Förderobjekte 17 bestimmt wird, welche zwischen dem in einer Sortierreihenfolge vorangehenden Förderobjekt 17 und dem besagten Ziel 23a beziehungsweise dem besagten stromabwärts gelegenen Fördertechnikelement/Knoten Ka..K34 liegen.

Die Berechnung der genannten Differenz kann sinngemäß aber auch anhand der Anzahl nk der Fördertechnikelement/Knoten Ka..K34 bestimmt werden, welche zwischen dem wartenden Förderobjekt 17 und dem besagten Ziel 23a beziehungsweise dem besagten stromabwärts gelegenen Fördertechnikelement/Knoten Ka..K34 liegen, und jener Anzahl nk der Fördertechnikelement/Knoten Ka..K34, welche zwischen dem in einer Sortierreihenfolge vorangehenden Förderobjekt 17 und dem besagten Ziel 23a beziehungsweise dem besagten stromabwärts gelegenen Fördertechnikelement/Knoten Ka..K34 liegen. Für das eingangs angeführte Beispiel bedeutet dies Differenz nk=-1. Das heißt, dass das am Knoten K5 wartende Förderobjekt 17 in der konkreten Situation noch nicht "überfällig" ist.

Schließlich kann die genannte Differenz aber auch anhand der Anzahl der Vektoren in der vektoriellen Verknüpfung bestimmt werden, welche zwischen dem wartenden Förderobjekt 17 und dem besagten Ziel 23a beziehungsweise dem besagten stromabwärts gelegenen Fördertechnikelement/Knoten Ka..K34 liegen, und jener Anzahl der Vektoren, welche zwischen dem in einer Sortierreihenfolge vorangehenden Förderobjekt 17 und dem besagten Ziel 23a beziehungsweise dem besagten stromabwärts gelegenen Fördertechnikelement/Knoten Ka..K34 liegen. Das oben Gesagte gilt dabei sinngemäß.

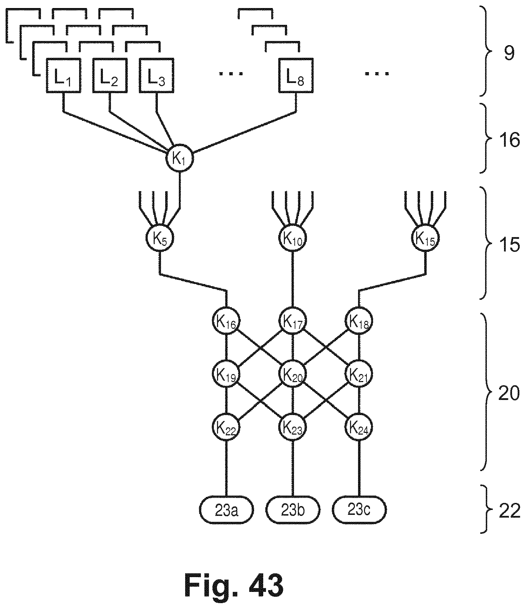

Fig. 43 zeigt eine Struktur einer beispielhaften Förderanlage, welche der in Fig. 42 gezeigten Struktur sehr ähnlich ist. Im Unterschied dazu fehlen aber eine ringförmige Förderbahn, Rückkopplungen und Sortierstufen/Sequenzer 24. Mit Hilfe des Netzes 20 können aber Fehler in einer Ist-Reihenfolge dennoch korrigiert werden. Beispielsweise können Objekte 17, welche den Knoten K16 verlassen, an den Knoten K19 oder an den Knoten K20 geleitet werden. Am Knoten K22 können die von den Knoten K19 und K20 stammenden Förderobjekte 17 wieder zusammengeführt werden. Das Netz kann zusätzlich oder alternativ aber dazu benutzt werden, die von den Knoten K16, K17 und K18 stammenden Förderobjekte 17 an die Ziele 23a, 23b und 23c zu leiten.

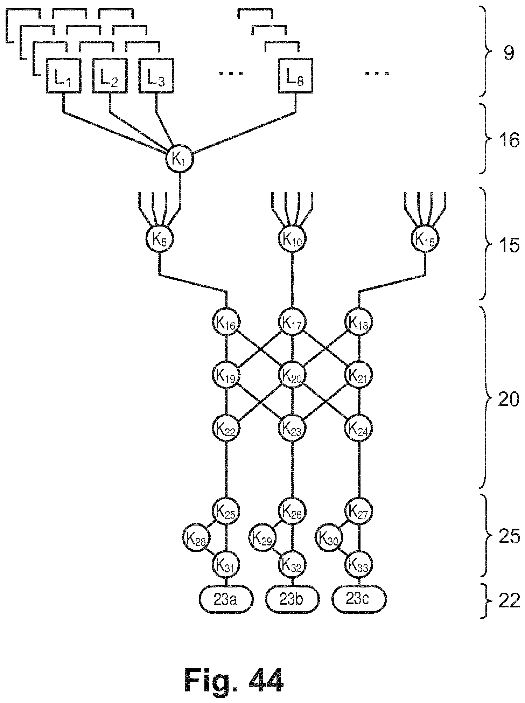

Fig. 44 zeigt eine weitere beispielhafte Struktur einer Förderanlage, welcher der in der Fig. 43 gezeigten Struktur sehr ähnlich ist. Im Unterschied dazu sind aber gesonderte Ausweichstrecken 25 vorgesehen, um Fehler in einer Sortierreihenfolge eines eintreffenden Förderstroms zu korrigieren.

An dieser Stelle wird angemerkt, dass die anhand der Figuren 26 bis 33 erläuterte Freigabe von Förderobjekten 17 anhand eines Bewertungsparameters auch ohne die Merkmale des Patentanspruchs 1, das heißt auch ohne die vektorielle Verknüpfung anwendbar ist. Darüber hinaus kann der Freigabe von Förderobjekten 17 anhand eines Bewertungsparameters auch ein anderer Sortieralgorithmus übergeordnet werden.

Beispielsweise kann vorgesehen sein, dass mehrere zu den eingehenden Fördersegmenten 1a, 1b stromabwärts gelegene und mit einer ODER-Verknüpfung logisch verknüpfte Auslöseeinrichtungen für die Freigabe einer Anhalteeinrichtung 4a, 4b beziehungsweise eines Förderobjekts 17 herangezogen werden und eine Anhalteeinrichtung 4a, 4b beziehungsweise ein an dieser wartendes Förderobjekt 17 freigegeben wird, wenn ein dem wartenden Förderobjekt 17 in einer Sortierreihenfolge vorangehendes Förderobjekt 17 eine der verknüpften Auslöseeinrichtungen passiert oder es kein vorangehendes Förderobjekt 17 gibt.

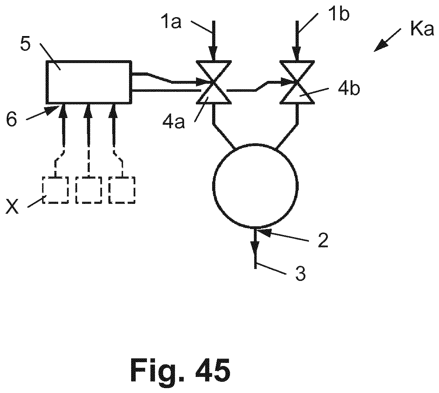

Fig. 45 zeigt dazu in Analogie zu Fig. 1 ein Beispiel eines Fördertechnikelements Kc zum Bündeln von Förderströmen, bei dem die Steuerung 5 eingangsseitig mit mehreren Auslöseeinrichtungen X verbunden ist, welche dem Fördertechnikelement/Knoten Kc nachgeordnet sind. Ein Förderobjekt 17 mit der Ordnungsnummer n wird bei diesem Verfahren nur dann freigegeben wird, wenn das unmittelbar beziehungsweise direkt vorangehende Förderobjekt 17 mit der Ordnungsnummer n-1 eine der ODER-verknüpften Auslöseeinrichtung X passiert, wodurch es im Grunde möglich ist, eine genaue Ist-Sortierreihenfolge am Ziel zu bilden.

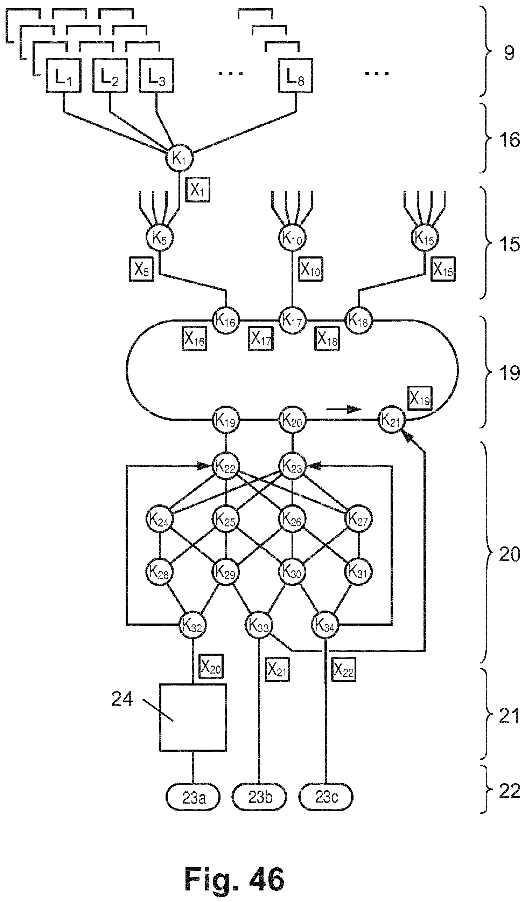

In Anlehnung an Fig. 42 zeigt Fig. 46 ein Beispiel, wie die Auslöseeinrichtungen X in einer Förderanlage verteilt sein können. Konkret sind in diesem Beispiel mehrere Auslöseeinrichtungen X1..X22 vorgesehen. Jedem Shuttle 16 ist dabei eine Auslöseeinrichtung X1..X4, X6..X9 und X11..X14 auf der Aufnahmeplattform zugeordnet und jedem Lift 15 ist eine Auslöseeinrichtung X5, X10 und X15 auf der Hubplattform zugeordnet.

Es wird ausdrücklich darauf hingewiesen, dass die Anordnung der Auslöseeinrichtungen X1..X22 lediglich beispielhaft ist, um die Funktionsweise der in Fig. 46 dargestellten Förderanlage zu illustrieren und natürlich auch anders erfolgen kann. Insbesondere wird darauf hingewiesen, dass im Netz 20 der besseren Darstellbarkeit halber überhaupt keine Auslöseeinrichtungen X1..X22 eingezeichnet sind. In einer realen Anlage können natürlich auch im Netz 20 Auslöseeinrichtungen X1..X22 an beliebiger Stelle vorgesehen sein. Weiterhin wird darauf hingewiesen, dass die Vernetzung der Knoten K1..K34 mit den Auslöseeinrichtungen X1..X22 in der Fig. 46 ebenfalls nicht explizit dargestellt ist, in einer realen Umsetzung der Förderanlage selbstverständlich vorliegt.

Beispielsweise können an die Eingänge 6 des Fördertechnikelements K1 die Auslöseeinrichtungen X5 und X16 angeschlossen sein. An das Fördertechnikelement K21 können zum Beispiel die Auslöseeinrichtungen X16..X19 angeschlossen sein. Das Fördertechnikelement K24 kann an nicht dargestellte Auslöseeinrichtungen im Netz 20 angeschlossen sein und so weiter.

Auch im Zusammenhang mit diesem Sortierverfahren ist es möglich, Fehler in einer Sortierreihenfolge zuzulassen und mit Hilfe eines dem Fördertechnikelement/ Knoten Ka..Kz, K1..K34 stromabwärts nachgelagerten Puffers, Sequenzers, einer Ausweichstrecke oder einer Rückkopplung zu korrigieren. Möglich ist zudem auch hier, dass mehrere Förderobjekte 17 dieselbe Ordnungsnummer in einer Sortierreihenfolge aufweisen, etwa wenn gleichartige Förderobjekte 17 in einem Förderstrom gruppiert werden sollen.

Zusammenfassend kann gesagt werden, dass das im Anspruch 3 definierte Verfahren auch unabhängig von den Merkmalen der Patentansprüche 1 bis 2, insbesondere im Zusammenhang mit einem anderen Sortierverfahren, anwendbar ist, wobei die Unteransprüche 4-8, 17-18, 21-26 und 28-29 ebenfalls sinngemäß anwendbar sind. Es resultiert somit ein Verfahren zum Bündeln von Förderströmen an einem Fördertechnikelement/Knoten Ka..Kz, K1..K34 mit mehreren eingehenden Fördersegmenten 1a, 1b, zumindest einer Ankopplung 2 an ein abgehendes Fördersegment 3, auf das die eingehenden Fördersegmente 1a, 1b zusammengeführt werden, und mehreren Anhalteeinrichtungen 4a, 4b zum Anhalten von Förderobjekten 17 beziehungsweise eines Förderflusses auf den eingehenden Fördersegmenten 1a, 1b, wobei
- für an dem Fördertechnikelement/Knoten Ka..Kz, K1..K34 wartende Förderobjekte 17 Bewertungsparameter berechnet werden,
- die Bewertungsparameter a) anhand einer Priorität einer Sortierreihenfolge berechnet werden, wobei höhere Prioritäten zu größeren/kleineren Bewertungsparametern führen, und/oder b) eines räumlichen und/oder zeitlichen Abstands zwischen den wartenden Förderobjekten 17 und den jeweils in zumindest einer Sortierreihenfolge vorangehenden Förderobjekten 17 berechnet werden, wobei dem Fördertechnikelement/Knoten Ka..Kz, K1..K34 stromabwärts gelegene Förderobjekte 17 positiv/negativ und dem Fördertechnikelement/Knoten Ka..Kz, K1..K34 stromaufwärts gelegene Förderobjekte 17 negativ/positiv gewertet werden und
- jenes Förderobjekt 17 freigegeben wird, dem der größte/kleinste Bewertungsparameter zugeordnet ist.

Dementsprechend resultiert auch ein Fördertechnikelement/Knoten Ka..Kz, K1..K34 zum Bündeln von Förderströmen, umfassend
- mehrere eingehende Fördersegmente 1a, 1b,
- zumindest eine Ankopplung 2 für ein abgehendes Fördersegment 3, auf das die eingehenden Fördersegmente 1a, 1b zusammengeführt werden, und
- mehrere Anhalteeinrichtungen 4a, 4b zum Anhalten eines Förderflusses auf den eingehenden Fördersegmenten 1a, 1b,
zusätzlich umfassend eine Steuerung 5, welche dazu eingerichtet ist,
- für an dem Fördertechnikelement/Knoten Ka..Kz, K1..K34 wartende Förderobjekte 17 Bewertungsparameter zu berechnen,
- die Bewertungsparameter a) anhand einer Priorität einer Sortierreihenfolge zu berechnen, wobei höhere Prioritäten zu größeren/kleineren Bewertungsparametern führen, und/oder b) eines räumlichen und/oder zeitlichen Abstands zwischen den wartenden Förderobjekten 17 und den jeweils in zumindest einer Sortierreihenfolge vorangehenden Förderobjekten 17 zu berechnen, wobei dem Fördertechnikelement/Knoten Ka..Kz, K1..K34 stromabwärts gelegene Förderobjekte 17 positiv/negativ und dem Fördertechnikelement/Knoten Ka..Kz, K1..K34 stromaufwärts gelegene Förderobjekte 17 negativ/positiv gewertet werden und
- jenes Förderobjekt 17 freizugeben, dem der größte/kleinste Bewertungsparameter zugeordnet ist.

Ähnlich verhält es sich mit dem im Patentanspruch 9 beanspruchten Verfahren, das nicht nur in Zusammenhang mit den Merkmalen der Patentansprüche 1 bis 2 angewendet werden kann, sondern auch im Zusammenhang mit einem anderen Sortierverfahren und/oder im Zusammenhang mit einem anderen Verfahren zur Priorisierung von Förderobjekten 17 beziehungsweise im Zusammenhang mit einer anderen Berechnungsart für den Bewertungsparameter. Die Unteransprüche 10-14, 17-18, 21-26 und 28-29 sind wiederum sinngemäß anwendbar. Es resultiert somit ein Verfahren zum Bündeln von Förderströmen an einem Fördertechnikelement/Knoten Ka..Kz, K1..K34 mit mehreren eingehenden Fördersegmenten 1a, 1b, zumindest einer Ankopplung 2 an ein abgehendes Fördersegment 3, auf das die eingehenden Fördersegmente 1a, 1b zusammengeführt werden, und mehreren Anhalteeinrichtungen 4a, 4b zum Anhalten von Förderobjekten 17 beziehungsweise eines Förderflusses auf den eingehenden Fördersegmenten 1a, 1b, wobei
- ein an einem Fördertechnikelement/Knoten Ka..Kz, K1..K34 wartendes Förderobjekt 17 freigegeben wird, wenn a) der zugeordnete Bewertungsparameter einen Schwellwert überschreitet/unterschreitet und wenn b) ein Platz in einem/einer dem Fördertechnikelement/Knoten Ka..Kz, K1..K34 stromabwärts nachgelagerten Puffer, Sequenzer, Ausweichstrecke oder Rückkopplung 19, 20, 24, 25 frei ist oder frei wird, wenn das besagte Förderobjekt 17 planmäßig an dem Puffer, dem Sequenzer, der Ausweichstrecke oder der Rücckopplung 19, 20, 24, 25 eintrifft und
- das Förderobjekt 17 dort hinein transportiert wird.

Dementsprechend resultiert auch ein Fördertechnikelement/Knoten Ka..Kz, K1..K34 zum Bündeln von Förderströmen, umfassend
- mehrere eingehende Fördersegmente 1a, 1b,
- zumindest eine Ankopplung 2 für ein abgehendes Fördersegment 3, auf das die eingehenden Fördersegmente 1a, 1b zusammengeführt werden, und
- mehrere Anhalteeinrichtungen 4a, 4b zum Anhalten eines Förderflusses auf den eingehenden Fördersegmenten 1a, 1b,
zusätzlich umfassend eine Steuerung 5, welche dazu eingerichtet ist,
- ein an einem Fördertechnikelement/Knoten Ka..Kz, K1..K34 wartendes Förderobjekt 17 freizugeben, wenn a) der zugeordnete Bewertungsparameter einen Schwellwert überschreitet/unterschreitet und wenn b) ein Platz in einem/einer dem Fördertechnikelement/Knoten Ka..Kz, K1..K34 stromabwärts nachgelagerten Puffer, Sequenzer, Ausweichstrecke oder Rückkopplung 19, 20, 24, 25 frei ist oder frei wird, wenn das besagte Förderobjekt 17 planmäßig an dem Puffer, dem Sequenzer, der Ausweichstrecke oder der Rückkopplung 19, 20, 24, 25 eintrifft.

Generell kann die Steuerung 5 in Hardware ausgeführt sein oder auch in Form eines Software-Algorithmus, der in einem Prozessor ausgeführt wird. Denkbar ist ferner auch, dass mehrere Instanzen des genannten Software-Algorithmus in einem Computer ausgeführt werden.

Vorteilhaft greifen die Fördertechnikelemente/Knoten Ka..Kz, K1..K34 schreibend und/oder lesend auf eine gemeinsame vektorielle Verknüpfung der Förderobjekte 17 zu. Beispielsweise kann diese in einer zentralen Steuerung gespeichert sein. Sind die Steuerungen durch mehrere Instanzen eines Software-Algorithmus in einem Computer realisiert, dann kann die gemeinsame vektorielle Verknüpfung der Förderobjekte 17 insbesondere auf diesem Computer gespeichert sein.

Physisch kann die Verbindung zwischen Steuerungen 5, die Verbindung von einer Steuerung 5 zu einer übergeordneten Steuerung oder auch die Verbindung der Auslöseeinrichtungen X1..X22 mit den Steuerungen 5 drahtgebunden oder drahtlos erfolgen. Beispielsweise können die genannten Verbindungen über ein Bussystem realisiert sein oder mit Hilfe eines drahtlosen Netzes erfolgen.

Generell können innerhalb einer Förderanlage Fördertechnikelemente K1..K34 mit unterschiedlicher Freigabestrategie verwendet werden. Beispielsweise können die Fördertechnikelemente K1..K15 dazu eingerichtet sein, ein Förderobjekt 17 mit der Ordnungsnummer n freizugeben, wenn eines der vorangehenden Förderobjekte 17 mit der Ordnungsnummer n-1 oder n-2 eine der ODER-verknüpften Auslöseeinrichtungen X1..X22 passiert, wohingegen die übrigen Fördertechnikelemente K16..K34 beispielsweise dazu eingerichtet sein können, ein Freigabeverfahren unter Zuhilfenahme der vektoriellen Verknüpfung auszuführen. Gegebenenfalls können die Vorgaben zur Freigabe eines Förderobjekts 17 im Betrieb auch dynamisch angepasst werden, beispielsweise von einer übergeordneten Steuerung.

Für die Versorgung mehrerer Ziele 23a..23c mit Förderobjekten 17 stehen mehrere Möglichkeiten zur Verfügung. Beispielsweise können für jedes Ziel 23a..23c gesonderte vektorielle Verknüpfungen angelegt werden, anhand derer die Fördertechnikelemente K1..K34 die Förderobjekte 17 durch die Förderanlage leiten. Eventuell auftretende Konflikte zwischen den einzelnen Verknüpfungen können beispielsweise anhand einer Priorisierung der Ziele 23a..23c gelöst werden. Denkbar ist aber auch, dass für alle Ziele 23a..23c eine gemeinsame vektorielle Verknüpfung angelegt wird. Dabei ist wiederum vorstellbar, dass für alle in der vektoriellen Verknüpfung enthaltenen Förderobjekte 17 ein Ring mit einem gleichbleibenden Richtungssinn der vektoriellen Verknüpfung vermieden wird, das heißt eine Reihenfolge für alle Ziele 23a..23c streng eingehalten wird. Denkbar ist aber auch, dass solche Ringe, welche Förderobjekte 17 unterschiedlicher Ziele 23a..23c beinhalten, zugelassen und nur für Förderobjekte 17 gleicher Ziele 23a..23c vermieden werden. Das heißt, die Förderobjekte 17 können im Hinblick auf unterschiedliche Ziele 23a..23c unsortiert an den Zielen 23a..23c eintreffen, die Förderobjekte 17 eines Ziels 23a..23c treffen aber sortiert ein.

Die Ausführungsbeispiele zeigen mögliche Ausführungsvarianten eines erfindungsgemäßen Fördertechnikelements Ka..Kz, K1..K34 respektive einer erfindungsgemäßen Förderanlage, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten möglich, die durch Kombinationen einzelner Details der dargestellten und beschriebenen Ausführungsvariante entstehen.

Insbesondere wird festgehalten, dass die dargestellten Vorrichtungen in der Realität auch mehr Bestandteile als dargestellt umfassen können.

Der Ordnung halber sei abschließend darauf hingewiesen, dass zum besseren Verständnis des Aufbaus eines Fördertechnikelements Ka..Kz, K1..K34 respektive einer erfindungsgemäßen Förderanlage dieses/diese bzw. dessen/deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1a, 1b: eingehendes Fördersegment
- 2: Ankopplung für abgehendes Fördersegment
- 3: abgehendes Fördersegment
- 4a, 4b: Anhalteeinrichtung
- 5: Steuerung

- 6: Eingang
- 7a, 7b: Sensor / Leseeinrichtung
- 8: Ausgangsleitung
- 9: Lager
- 10: Regalbediengerät

- 11: Schienen
- 12: Wagen
- 13: Mast
- 14: Hubplattform
- 15: Lift

- 16: Förderfahrzeug ("Shuttle")
- 17: Förderobjekt
- 18: Paternoster
- 19: Schleife
- 20: Netz

- 21: Sortierbereich
- 22: Kommissionierbereich
- 23a..23c: Ziel
- 24: Sortierstufe
- 25: Ausweichstrecke

- A1..A5: Ordnungsnummer Förderobjekt erstes Ziel
- B1..B3: Ordnungsnummer Förderobjekt zweites Ziel
- C1..C4: Ordnungsnummer Förderobj ekt drittes Ziel
- Ka..Kz, K1..K34: Fördertechnikelement / Knoten
- L, L1..L8, Lv: Lagerplatz

- nk: Anzahl Knoten
- np: Anzahl Förderobjekte
- s: Länge Förderstrom
- t: Durchlaufzeit Förderstrom
- X, X1..X22: Auslöseeinrichtung

## Patentansprüche

1. Verfahren zum Bündeln von Förderströmen an einem Fördertechnikelement beziehungsweise Knoten (Ka..Kz, K1..K34) mit mehreren eingehenden Fördersegmenten (1a, 1b), zumindest einer Ankopplung (2) an ein abgehendes Fördersegment (3), auf das die eingehenden Fördersegmente (1a, 1b) zusammengeführt werden, und mehreren Anhalteeinrichtungen (4a, 4b) zum Anhalten von Förderobjekten (17) auf den eingehenden Fördersegmenten (1a, 1b), **dadurch gekennzeichnet,**
- **dass** die Förderobjekte (17) entsprechend ihrer Soll-Sortierreihenfolge aufsteigend/absteigend vektoriell verknüpft werden und dass diese vektorielle Verknüpfung in einem Speicher einer dem Fördertechnikelement/Knoten (Ka..Kz, K1..K34) zugeordneten Steuerung (5) und/oder in einem Speicher einer übergeordneten Steuerung gespeichert wird,
- **dass** die Förderobjekte (17) unterschiedlicher Soll-Sortierreihenfolgen, welche das/den Fördertechnikelement/Knoten (Ka..Kz, K1..K34) passieren, entsprechend ihrer Ist-Reihenfolge aufsteigend/absteigend vektoriell verknüpft werden und dass dies in der bereits gespeicherten vektoriellen Verknüpfung gespeichert wird, und
- **dass** an einem Fördertechnikelement/Knoten (Ka..Kz, K1..K34) wartende Förderobjekte (17) in einer solchen Abfolge freigegeben werden, welche einen Ring mit einem gleichbleibenden Richtungssinn der in der gemeinsamen vektoriellen Verknüpfung der Soll-Sortierreihenfolgen und der Ist-Reihenfolge vermeiden.

2. Verfahren nach Anspruch 1, **dadurch gekennzeichnet, dass**
- für zumindest jene an dem Fördertechnikelement/Knoten (Ka..Kz, K1..K34) wartenden Förderobjekte (17) Bewertungsparameter berechnet werden, welche einen Ring mit einem gleichbleibenden Richtungssinn in der vektoriellen Verknüpfung vermeiden,
- die Bewertungsparameter a) anhand einer Priorität einer Sortierreihenfolge berechnet werden, wobei höhere Prioritäten zu größeren/kleineren Bewertungsparametern führen, und/oder b) anhand eines räumlichen und/oder zeitlichen Abstands (nk, np, s, t) zwischen den wartenden Förderobjekten (17) und den jeweils in zumindest einer Sortierreihenfolge vorangehenden Förderobjekten (17) berechnet werden, wobei dem Fördertechnikelement/Knoten (Ka..Kz, K1..K34) stromabwärts gelegene Förderobjekte (17) positiv/negativ und dem Fördertechnikelement/Knoten (Ka..Kz, K1..K34) stromaufwärts gelegene Förderobjekte (17) negativ/positiv gewertet werden und
- jenes Förderobjekt (17) freigegeben wird, dem der größte/kleinste Bewertungsparameter zugeordnet ist.

3. Verfahren nach Anspruch 1, **dadurch gekennzeichnet, dass**
- für zumindest jene an dem Fördertechnikelement/Knoten (Ka..Kz, K1..K34) wartenden Förderobjekte (17) Bewertungsparameter berechnet werden, welche einen Ring mit einem gleichbleibenden Richtungssinn in der vektoriellen Verknüpfung vermeiden,
- die Bewertungsparameter a) anhand einer Priorität einer Sortierreihenfolge berechnet werden, wobei höhere Prioritäten zu größeren/kleineren Bewertungsparametern führen, und/oder b) anhand von Differenzen räumlicher und/oder zeitlicher Abstände (nk, np, s, t) berechnet werden, wobei eine Differenz als räumlicher und/oder zeitlicher Abstand (nk, np, s, t) eines wartenden Förderobjekts (17) zu einem Ziel (23a..23c) oder stromabwärts gelegenen Fördertechnikelement/Knoten (Ka..Kz, K1..K34) weniger einem räumlichen und/oder zeitlichen Abstand (nk, np, s, t) des in einer Sortierreihenfolge vorangehenden Förderobjekts (17) zu diesem Ziel (23a..23c) oder zu diesem stromabwärts gelegenen Fördertechnikelement/Knoten (Ka..Kz, K1..K34) definiert ist und
- jenes Förderobjekt (17) freigegeben wird, dem der größte/kleinste Bewertungsparameter zugeordnet ist.

4. Verfahren nach einem der Ansprüche 1 bis 3, **dadurch gekennzeichnet, dass**
- ein an einem Fördertechnikelement/Knoten (Ka..Kz, Kl..K34) wartendes Förderobjekt (17) freigegeben wird, welches einen Ring mit einem gleichbleibenden Richtungssinn der vektoriellen Verknüpfung erzeugt, wenn a) der zugeordnete Bewertungsparameter einen Schwellwert überschreitet/unterschreitet und wenn b) ein Platz in einem/einer dem Fördertechnikelement/Knoten (Ka..Kz, K1..K34) stromabwärts nachgelagerten Puffer, Sequenzer, Ausweichstrecke oder Rückkopplung (19, 20, 24, 25) frei ist oder frei wird, wenn das besagte Förderobjekt (17) planmäßig an dem Puffer, dem Sequenzer, der Ausweichstrecke oder der Rückkopplung (19, 20, 24, 25) eintrifft und
- das Förderobjekt (17) dort hinein transportiert wird.

5. Verfahren nach Anspruch 4, **dadurch gekennzeichnet, dass** der den genannten Ring schließende Vektor
- nicht in der vektoriellen Verknüpfung eingetragen wird oder
- aus der vektoriellen Verknüpfung gelöscht wird, wenn das besagte Förderobjekt (17) in den Puffer, den Sequenzer, die Ausweichstrecke oder die Rückkopplung (19, 20, 24, 25) hinein transportiert wird.

6. Verfahren nach einem der Ansprüche 1 bis 5, **dadurch gekennzeichnet, dass** mehrere Förderobjekte (17) die gleiche Ordnungsnummer (A2, C1) in der Sortierreihenfolge aufweisen.

7. Verfahren nach einem der Ansprüche 1 bis 6 zum Bilden einer Sortierreihenfolge für ein zu versorgendes Ziel (23a..23c) oder mehrerer solcher Reihenfolgen für mehrere zu versorgende Ziele (23a..23c) in einer Förderanlage mit mehreren Fördertechnikelementen/Knoten (Ka..Kz, K1..K34) der genannten Art, wobei die zumindest eine Ankopplung (2) für ein abgehendes Fördersegment (3) des einen Fördertechnikelements/Knotens (Ka..Kz, K1..K34) mit einem eingehenden Fördersegment (1a, 1b) eines anderen Fördertechnikelements/Knotens (Ka..Kz, K1..K34) direkt oder indirekt verbunden ist.

8. Verfahren nach Anspruch 7, **dadurch gekennzeichnet, dass** die Fördertechnikelemente/Knoten (Ka..Kz, K1..K34) auf eine gemeinsame vektorielle Verknüpfung der Förderobjekte (17) zugreifen.

9. Verfahren nach einem der Ansprüche 1 bis 8, **dadurch gekennzeichnet, dass** zumindest jene Verfahrensschritte, welche einer Entscheidung über eine Freigabe eines Förderobjekts (17) zugeordnet sind, bis auf die Berücksichtigung der vektoriellen Verknüpfung unabhängig von allen anderen Fördertechnikelementen/Knoten (Ka..Kz, K1..K34) und/oder unabhängig von einer zentralen Steuerung ausgeführt werden.

10. Verfahren nach einem der Ansprüche 1 bis 9, **dadurch gekennzeichnet, dass** die Verfahrensschritte im Hinblick auf die Freigabe eines Förderobjekts (17) in allen Fördertechnikelementen/Knoten (Ka..Kz, K1..K34) in identischer Weise ausgeführt werden.

11. Verfahren nach einem der Ansprüche 8 bis 9 zum Betrieb einer Förderanlage der genannten Art mit einem vorgelagerten Lager (9) mit Lagerplätzen (L, L1..Lv), **dadurch gekennzeichnet, dass** das Fördertechnikelement/Knoten (Ka..Kz, K1..K34) als Auslagerungsroboter (10, 16) für das Lager (9) ausgebildet ist.

12. Verfahren nach einem der Ansprüche 1 bis 11, **dadurch gekennzeichnet, dass** die Freigaben pro Zeiteinheit von einer übergeordneten Steuerung überwacht werden und jene Anhalteeinrichtung (4a, 4b) freigegeben wird, an welcher das Förderobjekt (17) mit der niedrigsten Ordnungsnummer (A1..A5, B1..B3, C1..C4) wartet, wenn für die Freigaben pro Zeiteinheit ein Schwellwert unterschritten wird.

13. Verfahren nach einem der Ansprüche 1 bis 11, **dadurch gekennzeichnet, dass** die Freigaben pro Zeiteinheit je zu versorgendem Ziel (23a..23c) von einer übergeordneten Steuerung überwacht werden und jene Anhalteeinrichtung (4a, 4b) freigegeben wird, an welcher das Förderobjekt (17) mit der niedrigsten Ordnungsnummer (A1..A5, B1..B3, C1..C4) des betreffenden Ziels (23a..23c) wartet, wenn für die dem betreffenden Ziel (23a..23c) zugeordneten Freigaben pro Zeiteinheit ein Schwellwert unterschritten wird.

14. Fördertechnikelement beziehungsweise Knoten (Ka..Kz, K1..K34) zum Bündeln von Förderströmen, umfassend
- mehrere eingehende Fördersegmente (1a, 1b),
- zumindest eine Ankopplung (2) für ein abgehendes Fördersegment (3), auf das die eingehenden Fördersegmente (1a, 1b) zusammengeführt werden, und
- mehrere Anhalteeinrichtungen (4a, 4b) zum Anhalten eines Förderflusses auf den eingehenden Fördersegmenten (1a, 1b),
**gekennzeichnet durch**
- eine Steuerung (5), welche dazu eingerichtet ist, Förderobjekte (17) unterschiedlicher Soll-Sortierreihenfolgen, welche entsprechend ihrer jeweiligen Soll-Sortierreihenfolge in einem Speicher der Steuerung (5) und/oder in einem Speicher einer übergeordneten Steuerung aufsteigend/absteigend vektoriell verknüpft sind und welche das/den Fördertechnikelement/Knoten (Ka..Kz, K1..K34) passieren, entsprechend ihrer Ist-Reihenfolge aufsteigend/absteigend vektoriell zu verknüpfen und dies in der bereits gespeicherten vektoriellen Verknüpfung zu speichern und
- an einem Fördertechnikelement/Knoten (Ka..Kz, K1..K34) wartende Förderobjekte (17) in einer solchen Abfolge freizugeben, welche einen Ring mit einem gleichbleibenden Richtungssinn in der gemeinsamen vektoriellen Verknüpfung der Soll-Sortierreihenfolgen und der Ist-Reihenfolge vermeidet.

15. Förderanlage, umfassend mehrere Fördertechnikelemente/Knoten (Ka..Kz, K1..K34) nach Anspruch 14, **dadurch gekennzeichnet, dass** zumindest eine Ankopplung (2) für ein abgehendes Fördersegment (3) des einen Fördertechnikelements/Knotens (Ka..Kz, K1..K34) mit einem eingehenden Fördersegment (1a, 1b) eines anderen Fördertechnikelements/Knotens (Ka..Kz, K1..K34) direkt oder indirekt verbunden ist.

16. Förderanlage nach Anspruch 14 oder 15, **dadurch gekennzeichnet, dass** eine Programmlogik im Hinblick auf die Freigabe eines Förderobjekts (17) in allen Fördertechnikelementen/Knoten (Ka..Kz, K1..K34) identisch aufgebaut ist.

## Claims

1. A method for bundling conveying streams at a material handling element or node (Ka..Kz, K1..K34) with several incoming conveyor segments (1a, 1b), at least one coupling (2) to an outgoing conveyor segment (3), to which the incoming conveyor segments (1a, 1b) are merged, and several holding devices (4a, 4b) for stopping conveyed objects (17) on the incoming conveyor segments (1a, 1b), **characterized in that**
- the conveyed objects (17) are vectorially linked according to their target sorting sequence in ascending/descending order, and that said vectorial coupling is saved in a memory of a controller (5) assigned to the material handling element/node (Ka..Kz, K1..K34) and/or in a memory of a superordinate controller,
- the conveyed objects (17) of different target sorting sequences, which pass the material handling element/node (Ka..Kz, K1..K34), are linked vectorially according to their actual sequence in ascending/descending order and that this is saved in the already saved vectorial coupling, and
- conveyed objects (17) waiting at a material handling element/node (Ka..Kz, K1..K34) are released in such a sequence which avoids the formation of a ring with a constant sense of direction in the common vectorial coupling of the target sorting sequences and the actual sequence.

2. The method according to claim 1, **characterized in that**
- for at least those conveyed objects (17) waiting at the material handling element/node (Ka..Kz, K1..K34) evaluation parameters are calculated which avoid the formation of a ring with a constant sense of direction in the vectorial coupling,
- the evaluation parameters are calculated a) by means of a priority of a sorting sequence, wherein higher priorities result in larger/smaller evaluation parameters, and/or b) by means of a spatial and/or time interval (nk, np, s, t) between the waiting conveyed objects (17) and the preceding conveyed objects (17) in at least one sorting sequence, wherein conveyed objects (17) downstream of the material handling element/node (Ka..Kz, K1..K34) are evaluated positively/negatively and conveyed objects (17) upstream of the material handling element/node (Ka..Kz, K1..K34) are evaluated negatively/positively, and
- the particular conveyed object (17) is released, to which the largest/smallest evaluation parameter is assigned.

3. The method according to claim 1, **characterized in that**
- for at least those conveyed objects (17) waiting at the material handling element/node (Ka..Kz, K1..K34) evaluation parameters are calculated which avoid the formation of a ring with a constant sense of direction in the vectorial coupling,
- the evaluation parameters are calculated a) by means of a priority of a sorting sequence, wherein higher priorities result in higher/lower evaluation parameters, and/or b) by means of differences of spatial and/or time intervals (nk, np, s, t), wherein a difference is defined as a spatial and/or time interval (nk, np, s, t) of a waiting conveyed object (17) to a destination (23a..23c) or downstream material handling element/node (Ka..Kz, K1..K34) minus a spatial and/or time interval (nk, np, s, t) of the preceding conveyed objects (17) in a sorting sequence to this destination (23a..23c) or to said downstream material handling element/node (Ka..Kz, K1..K34), and
- the particular conveyed object (17) is released, to which the largest/smallest evaluation parameter is assigned.

4. The method according to one of claims 1 to 3, **characterized in that**
- a conveyed object (17) waiting at a material handling element/node (Ka..Kz, K1..K34) is released which forms a ring with a constant sense of direction of the vectorial coupling, if a) the assigned evaluation parameter exceeds/does not meet a threshold and if b) a space is free or becomes free in a buffer, sequencer, alternative route or feedback route (19, 20, 24, 25) downstream of the material handling element/node (Ka..Kz, K1..K34), when said conveyed object (17) reaches the buffer, the sequencer, the alternative route or the feedback route (19, 20, 24, 25) as planned and
- the conveyed object (17) is transported into the latter.

5. The method according to claim 4, **characterized in that** the vector closing said ring
- is not entered in the vectorial coupling, or
- is deleted from the vectorial coupling, if the said conveyed object (17) is transported into the buffer, the sequencer, the alternative route or the feedback route (19, 20, 24, 25).

6. The method according to one of claims 1 to 5, **characterized in that** several conveyed objects (17) have the same serial number (A2, C1) in the sorting sequence.

7. The method according to one of claims 1 to 6 for forming a sorting sequence for a destination (23a..23c) to be supplied or several ones of such sequences for several destinations (23a..23c) to be supplied in a conveyor system with several material handling elements/nodes (Ka..Kz, K1..K34) of said kind, wherein the at least one coupling (2) for an outgoing conveyor segment (3) of one material handling element/node (Ka..Kz, K1..K34) is connected directly or indirectly to an incoming conveyor segment (1a, 1b) of another material handling element/node (Ka..Kz, K1..K34).

8. The method according to claim 7, **characterized in that** the material handling elements/nodes (Ka..Kz, K1..K34) access a common vectorial coupling of the conveyed objects (17).

9. The method according to one of claims 1 to 8, **characterized in that** at least the method steps which are linked to a decision about the release of a conveyed object (17), are performed - apart from taking into account the vectorial coupling - independently of all other material handling elements/nodes (Ka..Kz, K1..K34) and/or independently of a central controller.

10. The method according to one of claims 1 to 9, **characterized in that** the method steps are performed in the same way with respect to the release of a conveyed object (17) in all material handling elements/nodes (Ka..Kz, K1..K34).

11. The method according to one of claims 8 to 9 for operating a conveyor system of the aforementioned kind with an upstream storage (9) with storage spaces (L, L1..Lv), **characterized in that** the material handling element/node (Ka..Kz, K1..K34) is designed as an unloading robot (10, 16) for the storage (9).

12. The method according to one of claims 1 to 11, **characterized in that** the releases per unit of time are monitored by a superordinate controller and the particular holding device (4a, 4b) is released, at which the conveyed object (17) with the lowest serial number (A1..A5, B1..B3, C1..C4) is waiting, if a threshold for the releases per unit of time is dropped below.

13. The method according to one of claims 1 to 11, **characterized in that** the releases per unit of time to each destination to be supplied (23a..23c) are monitored by a superordinate controller and the particular holding device (4a, 4b) is released, at which the conveyed object (17) with the lowest serial number (A1..A5, B1..B3, C1..C4) of the relevant destination (23a..23c) is waiting, if a threshold for the releases per unit of time assigned to the relevant destination (23a..23c) is dropped below.

14. A material handling element or node (Ka..Kz, K1..K34) for bundling conveying streams, comprising
- several incoming conveyor segments (1a, 1b),
- at least one coupling (2) for an outgoing conveyor segment (3), to which the incoming conveyor segments (1a, 1b) are merged, and
- several holding devices (4a, 4b) for stopping a conveying flow on the incoming conveyor segment (1a, 1b),
**characterized by**
- a controller (5), which is configured to vectorially link conveyed objects (17) with different target sorting sequences, which are vectorially linked according to their respective target sorting sequence in ascending/descending order in a memory of the controller (5) and/or in a memory of a superordinate controller, and which pass the material handling element/node (Ka..Kz, K1..K34) according to their actual sequence in ascending/descending order, and to save this in the already saved vectorial coupling, and
- to release conveyed objects (17) waiting at a material handling element/node (Ka..Kz, K1..K34) in a sequence which avoids the formation of a ring with a constant sense of direction in the common vectorial coupling of the target sorting sequences and the actual sequence.

15. A conveyor system, comprising several material handling elements/nodes (Ka..Kz, K1..K34) according to claim 14, **characterized in that** at least one coupling (2) for an outgoing conveyor segment (3) of one material handling element/node (Ka..Kz, K1..K34) is connected directly or indirectly to an incoming conveyor segment (1a, 1b) of another material handling element/node (Ka..Kz, K1..K34).

16. The conveyor system according to claim 14 or 15, **characterized in that** a program logic is designed to be identical with regard to the release of a conveyed object (17) in all material handling elements/nodes (Ka..Kz, K1..K34).

## Revendications

1. Procédé pour la focalisation de flux de convoyage au niveau d'un élément de convoyage respectivement d'un nœud (Ka..Kz, K1..K34) avec plusieurs segments de convoyage entrants (1a, 1b), au moins un couplage (2) à un segment de convoyage sortant (3), sur lequel les segments de convoyage entrants (1a, 1b) sont regroupés, et plusieurs dispositifs d'arrêt (4a, 4b) pour l'arrêt d'objets convoyés (17) sur les segments de convoyage entrants (1a, 1b), **caractérisé en ce que**
- les objets convoyés (17) sont connectés de manière ascendante/descendante vectoriellement en fonction de leur ordre de tri de consigne et cette connexion vectorielle est enregistrée dans une mémoire d'une commande (5) correspondant à l'élément de convoyage/nœud (Ka..Kz, K1..K34) et/ou dans une mémoire d'une commande principale,
- les objets convoyés (17) de différents ordres de tri de consigne, qui traversent l'élément de convoyage/nœud (Ka..Kz, K1..K34), sont connectés de manière ascendante/descendante vectoriellement en fonction de leur ordre de tri réel et cela est enregistré dans la connexion vectorielle déjà enregistrée et
les objets convoyés (17) en attente au niveau d'un élément de convoyage/nœud (Ka..Kz, K1..K34) sont libérés dans un ordre tel que ceux-ci évitent un anneau avec un sens constant dans la connexion vectorielle commune des ordres de tri de consigne et de l'ordre réel.

2. Procédé selon la revendication 1, **caractérisé en ce que**
- pour au moins les objets convoyés (17) en attente au niveau d'un élément de convoyage/nœud (Ka..Kz, K1..K34), des paramètres d'évaluation sont calculés qui évitent un anneau avec un sens constant dans la connexion vectorielle,
- les paramètres d'évaluation a) sont calculés à l'aide d'une priorité d'un ordre de tri, les priorités les plus élevées conduisant à des paramètres d'évaluation plus grands/plus petits, et/ou b) sont calculés à l'aide d'une distance spatiale et/ou temporelle (nk, np, s, t) entre les objets convoyés (17) en attente et les objets convoyés (17) précédents dans au moins un ordre de tri, les objets convoyés (17) disposés en aval de l'élément de convoyage/nœud (Ka..Kz, K1..K34) étant évalués positivement/négativement et les objets convoyés (17) disposés en amont de l'élément de convoyage/nœud (Ka..Kz, K1..K34) étant évalués négativement/positivement et
- l'objet convoyé (17) auquel correspond le paramètre d'évaluation le plus grand/le plus petit est libéré.

3. Procédé selon la revendication 1, **caractérisé en ce que**
- pour au moins les objets convoyés (17) en attente au niveau d'un élément de convoyage/nœud (Ka..Kz, K1..K34), des paramètres d'évaluation sont calculés qui évitent un anneau avec un sens constant dans la connexion vectorielle,
- les paramètres d'évaluation a) sont calculés à l'aide d'une priorité d'un ordre de tri, les priorités les plus élevées conduisant à des paramètres d'évaluation plus grands/plus petits, et/ou b) sont calculés à l'aide de différences de distances spatiales et/ou temporelles (nk, np, s, t), une différence étant définie comme une distance spatiale et/ou temporelle (nk, np, s, t) d'un objet convoyé (17) en attente par rapport à une destination (23a..23c) ou à des éléments de convoyage/nœuds (Ka..Kz, K1..K34) disposés en aval moins une distance spatiale et/ou temporelle (nk, np, s, t) de l'objet convoyé (17) précédent dans un ordre de tri par rapport à cette destination (23a..23c) ou à ces éléments de convoyage/nœuds (Ka..Kz, K1..K34) disposés en aval et
- l'objet convoyé (17) auquel correspond le paramètre d'évaluation le plus grand/le plus petit est libéré.

4. Procédé selon l'une des revendications 1 à 3, **caractérisé en ce que**
- un objet convoyé (17) en attente au niveau d'un élément de convoyage/nœud (Ka..Kz, K1..K34) est libéré, ce qui génère un anneau avec un sens constant de la connexion vectorielle, lorsque a) le paramètre d'évaluation dépasse/passe en dessous d'une valeur seuil et lorsque b) un emplacement dans un tampon, séquenceurs, tronçon de délestage ou couplage de retour (19, 20, 24, 25), disposé en aval de l'élément de convoyage/nœud (Ka..Kz, K1..K34), est libre ou devient libre lorsque l'objet convoyé (17) mentionné arrive comme prévu au niveau du tampon, au séquenceur, au tronçon de délestage ou au couplage de retour (19, 20, 24, 25) et
- l'objet convoyé (17) y est transporté.

5. Procédé selon la revendication 4, **caractérisé en ce que** le vecteur fermant l'anneau mentionné
- n'est pas pris en compte dans la connexion vectorielle ou
- est effacé de la connexion vectorielle lorsque l'objet convoyé (17) mentionné est transporté vers le tampon, le séquenceur, le tronçon de délestage ou le couplage de retour (19, 20, 24, 25).

6. Procédé selon l'une des revendications 1 à 5, **caractérisé en ce que** plusieurs objets convoyés (17) présentent le même numéro d'ordre (A2, C1) dans l'ordre de tri.

7. Procédé selon l'une des revendications 1 à 6, pour la formation d'un ordre de tri pour une destination (23a..23c) à alimenter ou de plusieurs ordres pour plusieurs destinations (23a..23c) à alimenter dans une installation de convoyage avec plusieurs éléments de convoyage/nœuds (Ka..Kz, K1..K34) du type mentionné, l'au moins un couplage (2) pour un segment de convoyage sortant (3) d'un élément de convoyage/nœud (Ka..Kz, K1..K34) étant relié directement ou indirectement avec un segment de convoyage entrant (1a, 1b) d'un autre élément de convoyage/nœud (Ka..Kz, K1..K34).

8. Procédé selon la revendication 7, **caractérisé en ce que** les éléments de convoyage/nœuds (Ka..Kz, K1..K34) accèdent à une connexion vectorielle commune des objets convoyés (17).

9. Procédé selon l'une des revendications 1 à 8, **caractérisé en ce qu'**au moins les étapes qui correspondent à une décision concernant une libération d'un objet convoyé (17), excepté la prise en compte de la connexion vectorielle, sont exécutées indépendamment de tous les autres éléments de convoyage/nœuds (Ka..Kz, K1..K34) et/ou indépendamment d'une commande centrale.

10. Procédé selon l'une des revendications 1 à 9, **caractérisé en ce que** les étapes sont exécutées de manière identique en ce qui concerne la libération d'un objet convoyé (17) dans tous les éléments de convoyage/nœuds (Ka..Kz, K1..K34).

11. Procédé selon l'une des revendications 8 à 9 pour l'exploitation d'une installation de convoyage du type mentionné avec un stockage (9) disposé en amont, avec des emplacements de stockage (L, L1..Lv), **caractérisé en ce que** l'élément de convoyage/nœud (Ka..Kz, K1..K34) est conçu comme un robot de déstockage (10, 16) pour le stockage (9).

12. Procédé selon l'une des revendications 1 à 11, **caractérisé en ce que** les libérations par unité de temps sont surveillées par une commande principale et les dispositifs d'arrêt (4a, 4b) sur lesquels attend l'objet convoyé (17) avec le numéro d'ordre (A1..A5, B1..B3, C1..C4) le plus bas est libéré lorsque, pour les libérations par unité de temps, on passe en dessous d'une valeur seuil.

13. Procédé selon l'une des revendications 1 à 11, **caractérisé en ce que** les libérations par unité de temps vers chaque destination (23a..23c) à alimenter sont surveillées par une commande principale et les dispositifs d'arrêt (4a, 4b) sur lesquels attend l'objet convoyé (17) avec le numéro d'ordre (A1..A5, B1..B3, C1..C4) le plus bas de la destination (23a..23c) concernée est libéré lorsque, pour les libérations par unité de temps correspondant à la destination (23a..23c) concernée, on passe en dessous d'une valeur seuil.

14. Élément de convoyage respectivement nœud (Ka..Kz, K1..K34) pour la focalisation de flux de convoyage, comprenant
- plusieurs segments de convoyage entrants (1a, 1b),
- au moins un couplage (2) pour un segment de convoyage sortant (3), sur lequel les segments de convoyage entrants (1a, 1b) sont regroupés et
- plusieurs dispositifs d'arrêt (4a, 4b) pour l'arrêt d'un flux de convoyage sur les segments de convoyage entrants (1a, 1b),
**caractérisé par**
- une commande (5), qui est conçue pour connecter de manière ascendante/descendante vectoriellement des objets convoyés (17) de différents ordres de tri de consigne, qui sont connectés en fonction de leur ordre de tri de consigne dans une mémoire de la commande (5) et/ou dans une mémoire d'une commande principale et qui traversent l'élément de convoyage/nœud (Ka..Kz, K1..K34), en fonction de leur ordre réel et pour enregistrer cela dans la connexion vectorielle déjà enregistrée et
- pour libérer les objets convoyés (17) en attente au niveau d'un élément de convoyage/nœud (Ka..Kz, K1..K34) dans un ordre qui évite un anneau avec un sens constant dans la connexion vectorielle commune des ordres de tri de consigne et de l'ordre réel.

15. Installation de convoyage comprenant plusieurs éléments de convoyage/nœuds (Ka..Kz, K1..K34) selon la revendication 14, **caractérisée en ce qu'**au moins un couplage (2) pour un segment de convoyage sortant (3) d'un élément de convoyage/nœud (Ka..Kz, K1..K34) est relié directement ou indirectement avec un segment de convoyage entrant (1a, 1b) d'un autre élément de convoyage/nœud (Ka..Kz, K1..K34).

16. Installation de convoyage selon la revendication 14 ou 15, **caractérisée en ce qu'**une logique de programmation est conçue de manière identique en ce qui concerne la libération d'un objet convoyé (17) dans tous les éléments de convoyage/nœuds (Ka..Kz, K1..K34).
